# EUROPEAN PATENT APPLICATION

(11) **EP 4 545 578 A1**
(43) Date of publication of application: **30.04.2025**
(21) Application number: 23827277.7
(22) Date of filing: 22.06.2023
(51) Int. Cl.: C08F 297/04, C08F 8/04, C08L 53/02

(54) **HYDROGENATED PRODUCT OF BLOCK COPOLYMER, RESIN COMPOSITION, GEL COMPOSITION, CABLE FILLER, CABLE, COSMETIC, LUBRICATING OIL, GREASE, AND METHOD FOR PRODUCING HYDROGENATED PRODUCT OF BLOCK COPOLYMER**

(30) Priority: 23.06.2022 JP 2022101320
(71) Applicant: Kuraray Co., Ltd., Kurashiki-shi, Okayama 710-0801 (JP)
(72) Inventor: SENDA, Yasushi, Tokyo 100-0004 (JP); TAKAHASHI, Naoto, Kamisu-shi, Ibaraki 314-0197 (JP); MASUDA, Mikio, Kamisu-shi, Ibaraki 314-0197 (JP); SATANI, Ryo, Kamisu-shi, Ibaraki 314-0197 (JP); AKAMA, Ryu, Kamisu-shi, Ibaraki 314-0197 (JP)
(74) Representative: Müller-Boré & Partner Patentanwälte PartG mbB
(86) International application number: PCT/JP2023/023208
(87) International publication number: WO 2023/249095

(57) **Abstract**

Disclosed are: a hydrogenated product of a block copolymer having a low glass transition temperature and exhibiting good flexibility, rubber elasticity, and elongation property even in a low temperature region; a resin composition; and a method for producing the hydrogenated product of the block copolymer, in which the hydrogenated product of the block copolymer contains a polymer block (A) containing a structural unit derived from an aromatic vinyl compound and a polymer block (B) containing a structural unit derived from a conjugated diene compound, and satisfies the following conditions (1) to (3): (1) the structural unit derived from the conjugated diene compound in the polymer block (B) has a structural unit derived from butadiene and a structural unit derived from isoprene, but does not have a structural unit derived from farnesene; (2) the hydrogenated product of the block copolymer has a glass transition temperature of -50°C or lower; and (3) when a weight average molecular weight of the hydrogenated product of the block copolymer is defined as x and a crystallization temperature of the hydrogenated product of the block copolymer is defined as y (°C), 5.8x/100,000 - y > 17 is satisfied.

## Description

### Technical Field

The present invention relates to a hydrogenated product of a block copolymer, a resin composition, a gel composition, a cable filler, a cable, a cosmetic, a lubricating oil, a grease, and a method for producing a hydrogenated product of a block copolymer.

### Background Art

A hydrogenated product of a block copolymer (hereinafter, also referred to as a "hydrogenated block copolymer") containing a polymer block (A) composed of a structural unit derived from an aromatic vinyl compound and a polymer block (B) composed of a structural unit derived from a conjugated diene compound, such as a hydrogenated styrene-based elastomer, is known.

The hydrogenated styrene-based elastomer is required to exhibit flexibility even in a low temperature region in some cases.

It is known that when a hydrogenated styrene-based elastomer in which a polymer block composed of a structural unit derived from a conjugated diene compound contains a component having a low glass transition temperature (Tg) such as a hydrogenated product of butadiene or isoprene (hereinafter, sometimes referred to as a "hydrogenated product") is used, flexibility can be generally exhibited even at a low temperature.

If the Tg of the hydrogenated styrene-based elastomer can be further lowered, the hydrogenated styrene-based elastomer can behave as a rubber even in a lower temperature region, so that the demand as a rubber having more excellent cold resistance can be satisfied.

It is also considered that, even in applications where impact resistance and heat shock resistance are imparted to a resin by adding an elastomer to the resin, the physical properties of the resin such as impact resistance and heat shock resistance can be improved in a low temperature region by lowering the Tg of the elastomer.

Incidentally, when a butadiene segment having a 1,4-bond in a polymer (hereinafter, sometimes referred to as a "1,4-butadiene segment") is hydrogenated, a hydrogenated product of the 1,4-butadiene segment has a structure of ethylene. Therefore, when a polymer block composed of a structural unit derived from a conjugated diene compound is composed of only the 1,4-butadiene segment, the polymer block is crystallized, and flexibility is easily lost.

Therefore, in the existing styrene-based elastomer, by increasing the degree of vinylation by incorporating, for example, about 40% of a butadiene segment having a 1,2-bond in butadiene (hereinafter, sometimes referred to as a "1,2-butadiene segment"), most of the polymer block composed of a structural unit derived from a conjugated diene compound is prevented from being crystallized.

However, since the Tg of a hydrogenated product of 1,2-polybutadiene is higher than the Tg of a hydrogenated product of 1,4-polybutadiene, a hydrogenated styrene-based elastomer containing a large amount of a 1,2-butadiene segment has a high Tg, which causes a problem that it is difficult to improve physical properties in a low temperature region.

Further, it is considered that the chain structure of the hydrogenated product of the 1,4-butadiene segment is partially crystallized, and when the hydrogenated product has a long chain structure, the crystallization temperature becomes high, so that the hydrogenated product is crystallized at a low temperature, and the flexibility and impact resistance of the styrene-based elastomer are liable to be lowered. In addition, the mobility of the non-crystallized portion located around the crystallized portion decreases due to the influence of the crystallized portion having low mobility. Therefore, it is considered that such crystallization of the butadiene segment also relates to an increase in Tg of the hydrogenated block copolymer.

Therefore, it is required to improve the characteristics in a lower temperature region by a new method different from the existing method of containing a large amount of 1,2-butadiene segment.

A hydrogenated block copolymer containing a monomer unit derived from farnesene is known (see, for example, PTL 1). In PTL 1, the hydrogenated block copolymer is said to improve vibration damping properties, flexibility, rubber elasticity, and weather resistance.

In addition, PTL 2 describes that tetrahydrofuran (THF) is added during polymerization of isoprene and butadiene in order to obtain a hydrogenated block copolymer having a styrene-hydrogenated (isoprene/butadiene)-styrene structure.

### Citation List

### Patent Literature

PTL 1: WO 2013/183570
PTL 2: WO 2017/159800

### Summary of Invention

### Technical Problem

In the hydrogenated block copolymer of PTL 1, no consideration is given to improving characteristics such as flexibility, rubber elasticity, and mechanical strength in a temperature region near or below -40°C, and in the hydrogenated block copolymer described in PTL 1, there is room for improvement in the above temperature region. Further, when the amount of farnesene used is increased, the cost tends to be increased and the mechanical strength tends to be decreased. Therefore, a new method that does not require farnesene is required.

In addition, PTL 2 aims to achieve both flexibility and low-temperature impact resistance of a mixture obtained by adding a hydrogenated block copolymer to polypropylene. Therefore, the amount of THF to be added when producing the hydrogenated block copolymer of PTL 2 is large, and the vinyl bonding amount of the obtained hydrogenated block copolymer becomes large. As a result, the Tg of the hydrogenated block copolymer is generally about -40°C , and the hydrogenated block copolymer has a relatively high Tg, and thus there is still room for improvement in the characteristics at lower temperatures.

As described above, there is a demand for a hydrogenated styrene-based elastomer exhibiting good characteristics such as flexibility, rubber elasticity, and mechanical strength at lower temperatures.

In addition, in a gel composition containing an oil component and a hydrogenated block copolymer, which is used for lubricating oils such as greases and engine oils, cosmetics, and the like, in order to further improve the characteristics such as thickening properties of the composition in these applications, it is also required to further improve the compatibility between the oil component and the hydrogenated block copolymer.

Therefore, an object of the present invention is to provide a hydrogenated product of a block copolymer having a low glass transition temperature and exhibiting good flexibility, rubber elasticity, and elongation property even in a low temperature region, a resin composition using the hydrogenated product, and a method for producing the hydrogenated product of a block copolymer.

Another object of the present invention is to provide a gel composition which can further enhance the compatibility between an oil component and a hydrogenated block copolymer and is excellent in thickening properties.

### Solution to Problem

The present inventors have found that the above objects can be solved by a hydrogenated product of a block copolymer containing a polymer block (A) containing a structural unit derived from an aromatic vinyl compound and a polymer block (B) containing a structural unit derived from a conjugated diene compound, in which the structural unit derived from a conjugated diene compound in the polymer block (B) is a specific one, and have completed the present invention.

The present invention relates to the following [1] to [23].
[1] A hydrogenated product of a block copolymer containing a polymer block (A) containing a structural unit derived from an aromatic vinyl compound and a polymer block (B) containing a structural unit derived from a conjugated diene compound, in which the hydrogenated product of a block copolymer satisfies the following conditions (1) to (3):
   (1) the structural unit derived from the conjugated diene compound in the polymer block (B) has a structural unit derived from butadiene and a structural unit derived from isoprene, but does not have a structural unit derived from farnesene;
   (2) the hydrogenated product of the block copolymer has a glass transition temperature of -50°C or lower; and
   (3) when a weight average molecular weight of the hydrogenated product of the block copolymer is defined as x and a crystallization temperature of the hydrogenated product of the block copolymer is defined as y (°C), a relationship of 5.8x/100,000 - y > 17 is satisfied.
[2] The hydrogenated product of a block copolymer according to the above [1], in which a content of the polymer block (A) in the hydrogenated product of a block copolymer is 5 to 70% by mass.
[3] The hydrogenated product of a block copolymer according to the above [2], in which the content of the polymer block (A) in the hydrogenated product of a block copolymer is 8 to 33% by mass.
[4] The hydrogenated product of a block copolymer according to any one of the above [1] to [3], in which a vinyl bonding amount in the polymer block (B) is 25 mol% or less.
[5] The hydrogenated product of a block copolymer according to the above [4], in which the vinyl bonding amount in the polymer block (B) is 18 mol% or less.
[6] The hydrogenated product of a block copolymer according to any one of the above [1] to [5], in which a content of the structural unit derived from butadiene in the polymer block (B) is 10 to 90 mol%.
[7] The hydrogenated product of a block copolymer according to the above [6], in which the content of the structural unit derived from butadiene in the polymer block (B) is 15 to 70 mol%.
[8] The hydrogenated product of a block copolymer according to the above [6], in which the content of the structural unit derived from butadiene in the polymer block (B) is 30 to 85 mol%.
[9] The hydrogenated product of a block copolymer according to any one of the above [1] to [8], in which the hydrogenated product of a block copolymer has a quantity of heat of crystallization of 20 J/g or less.
[10] The hydrogenated product of a block copolymer according to any one of the above [1] to [9], in which the hydrogenated product of a block copolymer has a weight average molecular weight of 30,000 to 500,000.
[11] The hydrogenated product of a block copolymer according to any one of the above [1] to [10], in which the polymer block (B) has a hydrogenation rate of 90 mol% or more.
[12] The hydrogenated product of a block copolymer according to any one of the above [1] to [11], further satisfying the following condition (4):
   (4) a chain ratio of 1,4-bond of hydrogenated butadiene represented by a proportion of a peak appearing at 29.2 ppm among peaks derived from the 1,4-bond of the hydrogenated butadiene, obtained by inverse gate decoupling ¹³C-NMR measurement, is less than 50%.
[13] The hydrogenated product of a block copolymer according to any one of the above [1] to [12], in which a tensile elongation at break measured in accordance with JIS K 6251 (2017) is 300% or more.
[14] The hydrogenated product of a block copolymer according to any one of the above [1] to [13], in which a shear storage modulus G' at -40°C measured by performing a complex shear viscosity test under the condition of a frequency of 1 Hz in accordance with JIS K 7244-10 (2005) is 200 MPa or less.
[15] A resin composition containing:
   the hydrogenated product of a block copolymer according to any one of the above [1] to [14] as a component (a); and
   one or more oil components selected from the group consisting of a mineral oil, a vegetable oil, and an ethylene/α-olefin copolymerized oligomer as a component (b),
   in which a content ratio (a)/(b) of the component (a) to the component (b) is 1/99 to 99/1 in terms of mass ratio.
[16] A resin composition containing:
   the hydrogenated product of a block copolymer according to any one of the above [1] to [14] as a component (a); and
   one or more selected from the group consisting of polyethylene, polypropylene, styrene-based resin, polyphenylene ether, polyester resin, polycarbonate, polyacetal, polyamide, polyarylene sulfide, polyarylate, polyimide, polyether ether ketone, and liquid crystal polyester as a component (c),
   in which a content ratio (a)/(c) of the component (a) to the component (c) is 1/99 to 99/1 in terms of mass ratio.
[17] A gel composition containing: the hydrogenated product of a block copolymer according to any one of claims 1 to 14 as a component (α); and a base oil (β).
[18] A cable filler containing the gel composition according to the above [17].
[19] A cable containing the gel composition according to the above [17].
[20] A cosmetic containing the gel composition according to the above [17].
[21] A lubricating oil containing the gel composition according to the above [17].
[22] A grease containing the gel composition according to the above [17].
[23] A method for producing the hydrogenated product of a block copolymer according to any one of the above [1] to [14], including:
   a first step of obtaining a block copolymer comprising a polymer block (A) containing a structural unit derived from an aromatic vinyl compound and a polymer block (B) containing a structural unit derived from butadiene and a structural unit derived from isoprene by performing a polymerization reaction using a polymerization initiator and at least an aromatic vinyl compound, butadiene, and isoprene as monomers; and
   a second step of hydrogenating the block copolymer,
   in which at least one of the following elements (i) to (vi) is performed in the first step:
      (i) an average feed rate when the butadiene and isoprene are fed to a reaction system is set to be 50 kg/h/mol or less;
      (ii) a polymerization temperature is set to be 55 to 80°C;
      (iii) a vinylating agent of 0.3% by mass or less with respect to the total mass of a raw material compound is added to the reaction system;
      (iv) a time for feeding the butadiene and isoprene to the reaction system is set to be 2.5 hours or more;
      (v) when an amount of the polymerization initiator charged is P (mol) and an amount of an unreacted conjugated diene monomer is Q (mol), Q/P during the polymerization of the polymer block (B) is 100 or less; and
      (vi) a mass ratio when the butadiene and isoprene are fed to the reaction system is made to differ depending on time of introduction to the reaction system.

### Advantageous Effects of Invention

According to the present invention, it is possible to provide a hydrogenated product of a block copolymer having a low glass transition temperature and exhibiting good flexibility, rubber elasticity, and elongation property even in a low temperature region, a resin composition using the hydrogenated product, and a method for producing the hydrogenated product of a block copolymer.

In addition, according to the present invention, it is possible to provide a gel composition which can further enhance the compatibility between an oil component and a hydrogenated block copolymer and is excellent in thickening properties.

### Description of Embodiments

Hereinafter, embodiments of the present invention will be described.

The present invention also includes aspects in which the items described in this description are arbitrary selected or arbitrary combined.

In this description, preferred regulations are arbitrary selected, and it can be said that the combination of the preferred regulations is more preferable.

In this description, the expression of "XX to YY" means "XX or more and YY or less".

In this description, the lower limit values and the upper limit values described in stages for the preferred numerical ranges (for example, the range of the content) can be independently combined. For example, the expression of "preferably 10 to 90, more preferably 30 to 60" can mean "10 to 60" by combining "the preferable lower limit value (10)" and "the more preferable upper limit value (60)".

### [Hydrogenated product of block copolymer]

The hydrogenated product of a block copolymer according to a first embodiment of the present invention is a hydrogenated product of a block copolymer containing a polymer block (A) containing a structural unit derived from an aromatic vinyl compound and a polymer block (B) containing a structural unit derived from a conjugated diene compound, in which the hydrogenated product of a block copolymer satisfies the following conditions (1) to (3):
(1) the structural unit derived from the conjugated diene compound in the polymer block (B) has a structural unit derived from butadiene and a structural unit derived from isoprene, but does not have a structural unit derived from farnesene;
(2) the hydrogenated product of the block copolymer has a glass transition temperature of -50°C or lower; and
(3) when a weight average molecular weight of the hydrogenated product of the block copolymer is defined as x and a crystallization temperature of the hydrogenated product of the block copolymer is defined as y (°C), a relationship of 5.8x/100,000 - y > 17 is satisfied.

As defined by the condition (1), by using butadiene and isoprene as the monomer for constituting the polymer block (B), continuous bonding of the structural unit derived from butadiene is suppressed, and the crystallization of the butadiene segment is easily prevented. Further, by not using farnesene as the monomer, the hydrogenated product of the block copolymer can be reduced in cost, and the reduction in mechanical strength of the hydrogenated product of the block copolymer is easily prevented.

However, as a result of intensive studies, the present inventors have found that in a conventionally proposed hydrogenated product of a block copolymer, a structural unit derived from butadiene and a structural unit derived from isoprene are unevenly distributed in the polymer block (B), and have found that the characteristics in a low temperature region can be improved by reducing the uneven distribution.

As a result of further investigation by the present inventors, it has been found that when the weight average molecular weight x of the hydrogenated product of the block copolymer and the crystallization temperature y (°C) of the hydrogenated product of the block copolymer satisfy the relationship 5.8x/100,000 - y > 17 as defined by the above condition (3), uneven distribution of structural units derived from butadiene is suppressed. In a hydrogenated product of a block copolymer having a large weight average molecular weight, since the amount of a polymerization initiator used at the time of production is generally small, the amount of a conjugated diene with respect to the amount of the polymerization initiator becomes large, and the uneven distribution of the structural unit derived from butadiene is likely to occur. However, when the randomness of the structural unit derived from butadiene and the structural unit derived from isoprene is increased, the crystallization of the polymer block (B) is easily suppressed. Therefore, when the uneven distribution of the structural unit derived from butadiene is suppressed, the above condition (3) is considered to be satisfied.

When the molecular weight of the block copolymer is increased so as to be applicable to various applications, the molecular weight of the polymer block (B), which is a polymer block other than both ends in the block copolymer, also increases. Therefore, when the hydrogenated block copolymer is produced under the conventional production conditions, the ethylene chain length after hydrogenation based on the chain of the structural unit derived from butadiene tends to increase (that is, the randomness tends to decrease). As a result, the crystallization temperature (Tc) of the hydrogenated block copolymer also tends to increase. Therefore, by using Tc without the influence of the molecular weight, the above condition (3) is set as a relational expression reflecting the fact that the polymer block (B) has good low-temperature characteristics. The hydrogenated block copolymer satisfying the condition (3) can be obtained, for example, by the procedure described in "Method for Producing Hydrogenated Block Copolymer" described later.

By satisfying the above conditions (1) and (3) in this way, it becomes easy to satisfy the condition defined by the above condition (2) in addition to the conditions (1) and (3), and as a result, various characteristics such as flexibility, impact resilience, and mechanical strength in a low temperature region can be improved. In addition, when the hydrogenated block copolymer is used together with an oil component to form a gel composition, it is considered that the compatibility between the hydrogenated block copolymer and the oil component is further enhanced, and when the gel composition is used for a grease, a cable filler, or a cosmetic, good thickening properties are obtained.

From the viewpoint of more easily satisfying the above condition (2), the value of "5.8x/100,000 - y" in the above condition (3) is preferably 18 or more, more preferably 19 or more, still more preferably 20 or more, even more preferably 25 or more, and particularly preferably 30 or more. The upper limit of the value of "5.8x/100,000 - y" is not particularly limited, but is usually 200 or less, may be 100 or less, and may be 50 or less.

In the description herein, the Tg of the hydrogenated product of the block copolymer is measured using a differential scanning calorimeter (DSC). Specifically, in a DSC curve prepared using DSC, the temperature at which a baseline shift occurs is defined as the Tg. More specifically, the Tg of the hydrogenated product of the block copolymer is measured according to the method described in Examples.

The hydrogenated product of the block copolymer preferably further satisfies the following condition (4) from the viewpoint of reducing uneven distribution of the structural unit derived from butadiene and the structural unit derived from isoprene in the polymer block (B) and increasing randomness of the structural unit derived from butadiene and the structural unit derived from isoprene.

(4) a chain ratio of 1,4-bond of the hydrogenated butadiene represented by a proportion of a peak appearing at 29.2 ppm among peaks derived from the 1,4-bond of the hydrogenated butadiene, obtained by inverse gate decoupling ¹³C-NMR measurement, is less than 50%.

The chain ratio of the 1,4-bond of the hydrogenated butadiene refers to a proportion of a peak appearing at 29.2 ppm to the total peaks derived from the 1,4-bond of the hydrogenated butadiene obtained by inverse gate decoupling ¹³C-NMR measurement. The chain ratio of the 1,4-bond of the hydrogenated butadiene is specifically measured by the method described in Examples.

In the above condition (4), from the viewpoint of enhancing the randomness of the structural unit derived from butadiene and the structural unit derived from isoprene, the chain ratio of the 1,4-bond of the hydrogenated butadiene is preferably 49% or less, more preferably 48% or less, still more preferably 45% or less, and even more preferably 40% or less. The lower limit is not particularly limited, but is, for example, 1% or more from the viewpoint of ease of production. In other words, the chain ratio of the 1,4-bond of the hydrogenated butadiene is preferably 1% or more and less than 50%.

Further, the hydrogenated product of a block copolymer according to a second embodiment of the present invention is a hydrogenated product of a block copolymer containing a polymer block (A) containing a structural unit derived from an aromatic vinyl compound and a polymer block (B) containing a structural unit derived from a conjugated diene compound, in which the hydrogenated product of a block copolymer satisfies the following conditions (I) to (III).
(I) The structural unit derived from the conjugated diene compound in the polymer block (B) has a structural unit derived from butadiene and a structural unit derived from isoprene, and preferably does not have a structural unit derived from farnesene.
(II) The hydrogenated product of the block copolymer has a glass transition temperature of -50°C or lower.
(III) A chain ratio of 1,4-bond of the hydrogenated butadiene represented by a proportion of a peak appearing at 29.2 ppm among peaks derived from the 1,4-bond of the hydrogenated butadiene, obtained by inverse gate decoupling ¹³C-NMR measurement, is less than 50%.

As defined in the condition (III), by setting the chain ratio of the 1,4-bond of the hydrogenated butadiene, which is represented by a proportion of a peak appearing at 29.2 ppm among peaks derived from the 1,4-bond of the hydrogenated butadiene obtained by inverse gate decoupling ¹³C-NMR measurement, to be smaller than a specific ratio, the uneven distribution of the structural unit derived from butadiene is suppressed, the randomness of the structural unit derived from butadiene and the structural unit derived from isoprene is increased, and crystallization of the polymer block (B) is easily suppressed.

Regarding the condition (I), as in the above-described condition (1), by using butadiene and isoprene as the monomer for constituting the polymer block (B), continuous bonding of the structural unit derived from butadiene is suppressed, and the crystallization of the butadiene segment is easily prevented.

By satisfying the above conditions (I) and (III), it becomes easy to satisfy the condition defined by the above condition (II) in addition to the conditions (I) and (III), and as a result, various characteristics such as flexibility, impact resilience, and mechanical strength in a low temperature region can be improved. In addition, when the hydrogenated block copolymer is used together with an oil component to form a gel composition, it is considered that the compatibility between the hydrogenated block copolymer and the oil component is further enhanced, and when the gel composition is used for a grease, a cable filler, or a cosmetic, good thickening properties are obtained.

Hereinafter, each component constituting the hydrogenated product of the block copolymer will be described. Unless otherwise specified, the following description is applied to both the first embodiment and the second embodiment. In addition, the first embodiment and the second embodiment may be collectively referred to as "the present embodiment".

### <Block Copolymer>

The hydrogenated product of a block copolymer is obtained by hydrogenating a block copolymer.

The hydrogenated product of a block copolymer according to an embodiment of the present invention is comprising a polymer block (A) containing a structural unit derived from an aromatic vinyl compound and a polymer block (B) containing a structural unit derived from a conjugated diene compound.

As defined by the above conditions (1) and (I), the structural unit derived from the conjugated diene compound of the polymer block (B) has a structural unit derived from butadiene and a structural unit derived from isoprene. The polymer block (B) will be described later in detail.

Further, as defined by the above conditions (2) and (II), the Tg of the hydrogenated block copolymer is -50°C or lower. The Tg of the hydrogenated block copolymer is preferably -53°C or lower, more preferably -55°C or lower, still more preferably -57°C or lower, and even more preferably -59°C or lower, from the viewpoint of easily ensuring impact resistance and rubber elasticity at a lower temperature. The lower limit of the Tg of the hydrogenated product of the block copolymer is not particularly limited, but is, for example, -80°C from the viewpoint of ease of production. In other words, the Tg of the hydrogenated product of the block copolymer is preferably -80 to -50°C.

The Tg of the hydrogenated block copolymer can be adjusted to fall within the above range, for example, by reducing the content of the structural unit derived from butadiene in the polymer block (B) of the hydrogenated block copolymer to suppress crystallization of hydrogenated butadiene.

### (Polymer Block (A))

The polymer block (A) contains a structural unit derived from an aromatic vinyl compound (hereinafter, sometimes abbreviated as "aromatic vinyl compound unit"), and the content thereof is preferably more than 70 mol%, more preferably 80 mol% or more, still more preferably 85 mol% or more, even more preferably 90 mol% or more, particularly preferably 95 mol% or more, and may be substantially 100 mol%, from the viewpoint of mechanical properties. In other words, the content of the aromatic vinyl compound unit in the polymer block (A) is preferably more than 70 mol% and 100 mol% or less.

Examples of the aromatic vinyl compound include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, a styrene derivative substituted with a silyl group, indene, and vinylnaphthalene. These aromatic vinyl compounds may be used alone or in combination of two or more kinds thereof. Among these, styrene, α-methylstyrene, p-methylstyrene, and mixtures thereof are preferable, and styrene is more preferable, from the viewpoint of the balance between production cost and physical properties.

However, the polymer block (A) may contain a structural unit derived from an unsaturated monomer other than the aromatic vinyl compound (hereinafter, sometimes abbreviated as "other unsaturated monomer unit") in a proportion of less than 30 mol% as long as the structural unit does not hinder the object and the effect of the present invention. Examples of the other unsaturated monomer include at least one selected from the group consisting of butadiene, isoprene, 2,3-dimethylbutadiene, 1,3-pentadiene, 1,3-hexadiene, isobutylene, methyl methacrylate, methyl vinyl ether, N-vinylcarbazole, β-pinene, 8,9-p-menthene, dipentene, methylene norbornene, and 2-methylenetetrahydrofuran. When the polymer block (A) contains the other unsaturated monomer unit, the bonding form is not particularly limited and may be either random or tapered.

The content of the structural unit derived from the other unsaturated monomer in the polymer block (A) is preferably 10 mol% or less, more preferably 5 mol% or less, and still more preferably 0 mol%.

The hydrogenated block copolymer is only required to have at least one polymer block (A). When the hydrogenated block copolymer has two or more polymer blocks (A), the polymer blocks (A) may be the same or different. In the description herein, "the polymer blocks are different" means that at least one of the monomer unit constituting the polymer block, the weight average molecular weight, the stereoregularity, and in the case of having a plurality of monomer units, the ratio of each monomer unit and the form of copolymerization (random, gradient, block) is different.

From the viewpoint of easily ensuring rubber elasticity, the hydrogenated block copolymer preferably has two polymer blocks (A).

The weight average molecular weight (Mw) of the polymer block (A) is not particularly limited, but the weight average molecular weight of at least one polymer block (A) among the polymer blocks (A) of the hydrogenated block copolymer is preferably 3,000 to 60,000, more preferably 6,000 to 55,000, still more preferably 7,000 to 50,000, even more preferably 7,500 to 40,000, particularly preferably 8,000 to 35,000, and most preferably 8,000 to 30,000, from the viewpoint of mechanical strength and moldability. In addition, from the viewpoint of fluidity and impact resistance, the weight average molecular weight of the at least one polymer block (A) is preferably 3,000 to 60,000, more preferably 3,500 to 15,000, still more preferably 4,000 to 10,000, even more preferably 4,200 to 9,000, particularly preferably 4,300 to 8,000, and most preferably 4,500 to 7,000.

The "weight average molecular weight" described in the description herein and claims is a weight average molecular weight in terms of standard polystyrene obtained by gel permeation chromatography (GPC) measurement, and the detailed measurement method can follow the method described in Examples. In the case of the triblock copolymer having the A1-B-A2 structure, the weight average molecular weight of the total of the polymer blocks "A1" and "A2" can be calculated from the weight average molecular weight of the block copolymer and the total content of the polymer blocks "A1" and "A2" confirmed by ¹H-NMR measurement, and the weight average molecular weight of the deactivated first polymer block "A1" can be calculated by GPC measurement, and subtracted to obtain the weight average molecular weight of the polymer block "A2".

The content of the polymer block (A) (the total content when a plurality of polymer blocks (A) are contained) in the hydrogenated block copolymer is preferably 5 to 70% by mass, more preferably 8 to 33% by mass, still more preferably 10 to 25% by mass, and even more preferably 15 to 22% by mass, from the viewpoint of easily ensuring impact resistance and rubber elasticity at a lower temperature. In addition, from the viewpoint of mechanical properties, the content thereof is preferably 5 to 70% by mass, more preferably 15 to 50% by mass, still more preferably 20 to 40% by mass, and even more preferably 25 to 35% by mass.

The content of the polymer block (A) in the hydrogenated block copolymer is a value determined by ¹H NMR measurement, and more specifically, is measured according to the method described in Examples.

### (Polymer Block (B))

In the hydrogenated product of the block copolymer according to the first embodiment, the polymer block (B) contains a structural unit derived from a conjugated diene compound (hereinafter, sometimes abbreviated as a "conjugated diene compound unit"), and the conjugated diene compound unit has a structural unit derived from butadiene and a structural unit derived from isoprene, and does not have a structural unit derived from farnesene.

The Tg of polyethylene having a structure equivalent to a structure in which a 1,4-butadiene segment is hydrogenated is considered to be about -120°C. Therefore, it is assumed that if hydrogenated butadiene is used as the polymer block (B) composed of a structural unit derived from a conjugated diene compound and crystallization can be further prevented, a hydrogenated block copolymer having a low Tg can be obtained.

Therefore, by using isoprene as a monomer for constituting the polymer block (B), continuous bonding of the structural unit derived from butadiene is suppressed, and crystallization of butadiene is easily prevented, and as a result, crystallization of the polymer block (B) is easily suppressed.

However, according to the studies of the present inventors, it has been found that when the structural unit derived from butadiene and the structural unit derived from isoprene are unevenly distributed in the polymer block (B), the bonding units derived from butadiene are easily continuously bonded, and the polymer block (B) is easily crystallized. As a result, it has been found that the characteristics in a low temperature region cannot be sufficiently improved.

Therefore, as defined in the above-mentioned condition (3), when the weight average molecular weight x of the hydrogenated product of the block copolymer and the crystallization temperature y (°C) of the hydrogenated product of the block copolymer satisfy a specific relationship, the uneven distribution of the structural unit derived from butadiene is suppressed, and the randomness of the structural unit derived from butadiene and the structural unit derived from isoprene is increased, and thus the crystallization of the polymer block (B) is easily suppressed.

In the hydrogenated product of the block copolymer according to the second embodiment, the polymer block (B) contains a conjugated diene compound unit, and the conjugated diene compound unit has a structural unit derived from butadiene and a structural unit derived from isoprene, and preferably does not have a structural unit derived from farnesene.

As defined in the above-mentioned condition (III), by setting the chain ratio of the 1,4-bond of the hydrogenated butadiene in the hydrogenated block copolymer to a specific range, in the hydrogenated product of the block copolymer according to the second embodiment, uneven distribution of a structural unit derived from butadiene is suppressed, and thus the randomness of the structural unit derived from butadiene and the randomness of the structural unit derived from isoprene are increased, and crystallization of the polymer block (B) is easily suppressed.

**In** the hydrogenated product of the block copolymer according to the first embodiment, the polymer block (B) may contain a structural unit derived from a conjugated diene compound other than butadiene, isoprene, and β-farnesene as long as the structural unit does not hinder the object and the effect of the present invention or may not contain such a structural unit. From the viewpoint of easily obtaining the target performance, it is desirable that the polymer block (B) does not contain a structural unit derived from a conjugated diene compound other than butadiene, isoprene, and β-farnesene (that is, only the structural unit derived from butadiene and the structural unit derived from isoprene are contained as the conjugated diene compound unit).

The total content of the conjugated diene compound units in the polymer block (B) is preferably 60% by mass or more, more preferably 70% by mass or more, still more preferably 80% by mass or more, and particularly preferably 90% by mass or more, from the viewpoint of flexibility and rubber elasticity. The upper limit thereof is not particularly limited and can be set to 100% by mass. **In** other words, the total content of the conjugated diene compound units in the polymer block (B) is preferably 60 to 100% by mass.

The total content of the conjugated diene compound units in the polymer block (B) is, in terms of molar amount, preferably 30 mol% or more, more preferably 50 mol% or more, still more preferably 65 mol% or more, even more preferably 80 mol% or more, particularly preferably 90 mol% or more, and most preferably substantially 100 mol%. **In** other words, the total content of the conjugated diene compound units in the polymer block (B) is preferably 30 to 100 mol%.

**In** the hydrogenated product of the block copolymer according to the first embodiment, the content of the structural unit derived from butadiene in the polymer block (B) is preferably 10 to 90 mol%, more preferably 15 to 70 mol%, and still more preferably 20 to 60 mol%, from the viewpoint of suppressing crystallization of the polymer block (B) and improving low-temperature characteristics. **In** addition, from the viewpoint of improving strength by increasing the content of butadiene to increase entanglement between the hydrogenated block copolymers, the content of the structural unit derived from butadiene in the polymer block (B) is preferably 10 to 90 mol%, more preferably 30 to 85 mol%, still more preferably 40 to 80 mol%, and particularly preferably 45 to 75 mol%.

**In** the hydrogenated product of the block copolymer according to the first embodiment, the mixing ratio of the conjugated diene compounds [butadiene/isoprene] (mass ratio) is not particularly limited as long as the effect of the present invention is not impaired, but is preferably 10/90 to 90/10, more preferably 20/80 to 80/20, and still more preferably 30/70 to 70/30. The mixing ratio [butadiene/isoprene] is preferably 6/94 to 96/4, more preferably 12/88 to 92/8, still more preferably 24/76 to 83/17, and particularly preferably 35/65 to 75/25, in terms of molar ratio.

**In** the hydrogenated product of the block copolymer according to the second embodiment, the polymer block (B) may contain a structural unit derived from a conjugated diene compound other than butadiene and isoprene as long as the structural unit does not hinder the object and the effect of the present invention or may not contain such a structural unit. Examples of the conjugated diene compound other than butadiene and isoprene include β-farnesene and myrcene.

From the viewpoint of easily obtaining the target performance, it is preferable that the polymer block (B) does not contain a structural unit derived from a conjugated diene compound other than butadiene and isoprene. From such a viewpoint and from the viewpoint of cost, it is desirable that the polymer block (B) does not contain a structural unit derived from β-farnesene.

In the hydrogenated product of the block copolymer according to the second embodiment, suitable numerical ranges of the total content of the conjugated diene compound units in the polymer block (B), the content of the structural unit derived from butadiene in the polymer block (B), and the mixing ratio [butadiene/isoprene] (mass ratio, molar ratio) of the conjugated diene compounds are the same as those described for the polymer block (B) of the hydrogenated product of the block copolymer according to the first embodiment.

In addition, as long as the object and the effect of the present invention are not hindered, the polymer block (B) in the hydrogenated products of the block copolymers according to the first and second embodiments may contain a structural unit derived from a polymerizable monomer other than the conjugated diene compound. **In** this case, the content of the structural unit derived from a polymerizable monomer other than the conjugated diene compound in the polymer block (B) is preferably 70 mol% or less, more preferably 50 mol% or less, still more preferably 35 mol% or less, and particularly preferably 20 mol% or less. The lower limit value of the content of the structural unit derived from the polymerizable monomer other than the conjugated diene compound is not particularly limited, but may be 0 mol%, may be 5 mol%, or may be 10 mol%. In other words, the content of the structural unit derived from the polymerizable monomer other than the conjugated diene compound in the polymer block (B) is preferably 0 to 70 mol%.

Examples of the other polymerizable monomer include aromatic vinyl compounds such as styrene, α-methylstyrene, o-methylstyrene, m-methylstyrene, p-methylstyrene, p-t-butylstyrene, 2,4-dimethylstyrene, vinylnaphthalene, and vinylanthracene, and at least one compound selected from the group consisting of methyl methacrylate, methyl vinyl ether, N-vinylcarbazole, β-pinene, 8,9-p-menthene, dipentene, methylene norbornene, 2-methylenetetrahydrofuran, 1,3-cyclopentadiene, 1,3-cyclohexadiene, 1,3-cycloheptadiene, and 1,3-cyclooctadiene. Among these, styrene, α-methylstyrene, and p-methylstyrene are more preferable, and styrene is still more preferable.

When the polymer block (B) contains a structural unit derived from a polymerizable monomer other than the conjugated diene compound, the bonding form thereof is not particularly limited, and may be any of random and tapered ones, but is preferably random.

Further, the hydrogenated block copolymers according to the first and second embodiments may have at least one polymer block (B). When the hydrogenated block copolymers have two or more polymer blocks (B), the polymer blocks (B) may be the same or different. When the polymer block (B) has two or more kinds of structural units, the bonding form thereof may be random, tapered, completely alternating, partially block-like, block, or a combination of two or more types thereof. From the viewpoint of easily ensuring impact resistance and rubber elasticity at a low temperature, the number of the polymer blocks (B) in the hydrogenated block copolymer is preferably 3 or less, and more preferably 2 or less. When the hydrogenated block copolymer is used for applications in which rubber elasticity is emphasized, it is even more preferable that the number of the polymer blocks (B) in the hydrogenated block copolymer is 1. In a case where the hydrogenated block copolymer has two or more polymer blocks (B), the polymer blocks (B) may be the same or may be different.

The bonding form of the conjugated diene compound is not particularly limited as long as the object and the effect of the present invention are not impaired. For example, the respective bonding forms of butadiene and isoprene can be 1,2-bond and 1,4-bond in the case of butadiene, and 1,2-bond, 3,4-bond, and 1,4-bond in the case of isoprene. Only one of these bonding forms may be present, or two or more thereof may be present.

The content of the polymer block (B) (the total content when a plurality of polymer blocks (B) are contained) in the hydrogenated block copolymers according to the first and second embodiments is preferably 30 to 95% by mass, more preferably 67 to 92% by mass, still more preferably 75 to 90% by mass, and even more preferably 78 to 85% by mass, from the viewpoint of easily ensuring impact resistance and rubber elasticity at a lower temperature. In addition, from the viewpoint of mechanical properties, the content thereof is preferably 30 to 95% by mass, more preferably 50 to 85% by mass, still more preferably 60 to 80% by mass, and even more preferably 65 to 75% by mass.

The content of the polymer block (B) in the hydrogenated block copolymer is a value determined by ¹H NMR measurement, and more specifically, is measured according to the method described in Examples.

### (Vinyl Bonding Amount of Polymer Block (B))

Among the bonding forms of the structural units constituting the polymer block (B), a 1,2-bond derived from butadiene, a 1,2-bond and a 3,4-bond derived from isoprene are defined as a vinyl bond, and the content of the vinyl bond unit is defined as a vinyl bonding amount. The vinyl bonding amount of the polymer block (B) is a ratio of a 3,4-bond unit and a 1,2-bond unit in an isoprene structural unit and a 1,2-bond unit in a butadiene structural unit to all structural units derived from butadiene and isoprene.

In the hydrogenated block copolymers according to the first and second embodiments, the total vinyl bonding amount in the polymer block (B) is preferably 25 mol% or less, more preferably 20 mol% or less, still more preferably 18 mol% or less, even more preferably 16 mol% or less, and particularly preferably 14 mol% or less, from the viewpoint of lowering Tg. On the other hand, it is preferably 3 mol% or more, more preferably 5 mol% or more, still more preferably 8 mol% or more, and particularly preferably 10 mol% or more, from the viewpoint of suppressing crystallization. In other words, the vinyl bonding amount in the polymer block (B) is preferably 3 to 25 mol%. Here, the vinyl bonding amount is a value calculated by ¹H-NMR measurement according to the method described in Examples.

The total weight average molecular weight of the polymer blocks (B) of the hydrogenated block copolymers according to the first and second embodiments is preferably 15,000 to 800,000, more preferably 20,000 to 200,000, still more preferably 30,000 to 150,000, particularly preferably 50,000 to 130,000, and most preferably 70,000 to 100,000 in a state before hydrogenation, from the viewpoint of impact resistance at a low temperature. On the other hand, from the viewpoint of rubber elasticity and mechanical properties, the total weight average molecular weight of the polymer blocks (B) is preferably 15,000 to 800,000, more preferably 50,000 to 600,000, still more preferably 60,000 to 400,000, particularly preferably 65,000 to 350,000, and most preferably 70,000 to 300,000 in a state before hydrogenation.

In the hydrogenated block copolymer, the polymer block (B) preferably does not contain a structural unit derived from an aromatic vinyl compound. When the polymer block (B) contains a structural unit derived from an aromatic vinyl compound, impact resistance and rubber elasticity at a low temperature may be reduced.

### (Bonding Mode of Polymer Block (A) and Polymer Block (B))

The hydrogenated block copolymer may have any bonding form without limitation as long as the polymer block (A) and the polymer block (B) are bonded, and may have any of a linear form, a branched form, a radial form, and a bonding mode of two or more of these forms in combination. Among these, the bonding form of the polymer block (A) and the polymer block (B) is preferably a linear form, and examples thereof include a diblock copolymer represented by A-B when the polymer block (A) is represented by "A" and the polymer block (B) is represented by "B", a triblock copolymer represented by A-B-A or B-A-B, a tetrablock copolymer represented by A-B-A-B, a pentablock copolymer represented by A-B-A-B-A or B-A-B-A-B, and an (A-B)nX-type copolymer (X represents a coupling agent residue, and n represents an integer of 3 or more). Among them, a linear triblock copolymer or a diblock copolymer is preferable, and an A-B-A type triblock copolymer is preferably used from the viewpoint of flexibility and easiness of production.

Here, in the description herein, when polymer blocks of the same kind are linearly bonded via a bifunctional coupling agent or the like, the whole of the bonded polymer blocks is treated as one polymer block. Accordingly, a polymer block which is originally strictly represented by Y-X-Y (X represents a coupling residue), including the above-mentioned examples, is represented by Y as a whole, except for the case where it is particularly necessary to distinguish the polymer block from a single polymer block Y. In the description herein, since such a polymer block containing a coupling agent residue is handled as described above, for example, a block copolymer which contains a coupling agent residue and should be strictly represented as A-B-X-B-A (X represents a coupling agent residue) is represented as A-B-A and is treated as an example of a triblock copolymer.

The hydrogenation rate of the polymer block (B) is preferably 90 mol % or more. In other words, it is preferable that 90 mol% or more of the carbon-carbon double bonds of the polymer block (B) are hydrogenated. Here, the hydrogenation rate of the polymer block (B) is based on the amount of double bonds before hydrogenation.

When the hydrogenation rate of the polymer block (B) is high, the heat resistance and the weather resistance are excellent. From the same viewpoint, the hydrogenation rate of the polymer block (B) is more preferably 91 mol% or more, more preferably 92 mol% or more, still more preferably 93 mol% or more, and particularly preferably 95 mol% or more. The upper limit value of the hydrogenation rate is not particularly limited, but the upper limit value may be substantially 100 mol%, may be 99.8 mol%, may be 99.5 mol%, or may be 99 mol%. In other words, the hydrogenation rate of the polymer block (B) is preferably 90 to 100 mol%.

The hydrogenation rate is a value obtained by measuring the content of carbon-carbon double bonds in the structural unit derived from a conjugated diene compound in the polymer block (B) after hydrogenation by ¹H-NMR measurement, and more specifically, is a value measured according to the method described in Examples.

### (Contents of Polymer Block (A) and Polymer Block (B))

From the viewpoint of easily exhibiting intended performance, the total content of the polymer block (A) and the polymer block (B) in the hydrogenated block copolymer is preferably 95% by mass or more, more preferably 98% by mass or more, and still more preferably 99% by mass or more, and may be 100% by mass.

The hydrogenated product of the block copolymer is preferably composed of only the block copolymer (A) and the block copolymer (B), but may contain an impurity component that is inevitably contained.

### (Weight Average Molecular Weight (Mw) of Hydrogenated Block Copolymer)

The weight average molecular weight (Mw) of the hydrogenated product of the block copolymer determined by gel permeation chromatography in terms of standard polystyrene is not particularly limited, but is preferably 30,000 to 500,000 from the viewpoint of the balance between heat resistance and moldability. From the viewpoint of heat resistance, the lower limit of the weight average molecular weight (Mw) of the hydrogenated product of the block copolymer is more preferably 60,000 or more, still more preferably 70,000 or more, particularly preferably 80,000 or more, more particularly preferably 85,000 or more, and most preferably 90,000 or more. On the other hand, when the moldability is emphasized, the upper limit of the weight average molecular weight (Mw) of the hydrogenated product of the block copolymer is more preferably 450,000 or less, still more preferably 400,000 or less, even more preferably 350,000 or less, particularly preferably 330,000 or less, more particularly preferably 320,000 or less, and most preferably 300,000 or less. **In** addition, since the hydrogenated products of the block copolymers according to the first and second embodiments of the present invention exhibit good flexibility, rubber elasticity, and elongation property even in a low temperature region, they are preferably used, for example, as a resin modifier for improving the impact resistance of other resins. When a hydrogenated product of a block copolymer is used as the resin modifier, the upper limit of the weight average molecular weight (Mw) of the hydrogenated product of a block copolymer is preferably 250,000 or less, more preferably 200,000 or less, still more preferably 180,000 or less, even more preferably 150,000 or less, particularly preferably 130,000 or less, more particularly preferably 120,000 or less, and most preferably 110,000 or less, from the viewpoint of easily obtaining more excellent impact resistance.

The weight average molecular weight of the hydrogenated block copolymer can be set within the above range, for example, by adjusting the amount of the monomer relative to the polymerization initiator.

The hydrogenated block copolymer may have one, or two or more functional groups such as a carboxy group, a hydroxy group, an acid anhydride group, an amino group, and an epoxy group in the molecular chain and/or at the molecular terminal, as long as the object and the effect of the present invention are not impaired, or may have no functional group.

### (Physical Properties of Hydrogenated Block Copolymer)

The hydrogenated product of the block copolymer may have a crystallization temperature of 0°C or lower, or may have no crystallization temperature. When the hydrogenated block copolymer has a crystallization temperature of 0°C or lower, or has no crystallization temperature, flexibility and rubber elasticity are improved. From the viewpoint of improving flexibility and rubber elasticity, when the hydrogenated block copolymer has a crystallization temperature, the crystallization temperature is more preferably -5°C or lower, still more preferably -10°C or lower, even more preferably -15°C or lower, even more preferably -20°C or lower, even more preferably -25°C or lower, and particularly preferably -30°C or lower. The lower limit of the crystallization temperature is not particularly limited, and is, for example, -70°C. **In** other words, the crystallization temperature of the hydrogenated block copolymer is preferably -70 to 0°C when the crystallization temperature is present.

In the description herein, the crystallization temperature of the hydrogenated block copolymer is measured by thermal analysis using DSC, and is specifically measured by the method described in Examples.

The crystallization temperature of the hydrogenated block copolymer can be set as described above, for example, by adjusting the polymerization conditions of the diene monomer.

The hydrogenated product of the block copolymer may have a quantity of heat of crystallization of 20 J/g or less, or may have no crystallization temperature. When the hydrogenated block copolymer has a quantity of heat of crystallization of 20 J/g or less, or has no crystallization temperature, flexibility and rubber elasticity are improved. From the viewpoint of improving flexibility and rubber elasticity, the quantity of heat of crystallization is more preferably 15 J/g or less, still more preferably 10 J/g or less, still more preferably 6 J/g or less, and particularly preferably no crystallization peak is present. The lower limit of the quantity of heat of crystallization is not particularly limited, and is, for example, 1 J/g. In other words, the quantity of heat of crystallization of the hydrogenated block copolymer is preferably 1 to 20 J/g when a crystallization peak is present.

In the description herein, the quantity of heat of crystallization of the hydrogenated block copolymer is measured by thermal analysis using DSC, and is specifically measured by the method described in Examples.

The quantity of heat of crystallization of the hydrogenated block copolymer can be set as described above, for example, by adjusting the polymerization conditions of the diene monomer.

The tensile elongation at break of the hydrogenated product of the block copolymer measured in accordance with JIS K 6251 (2017) is preferably 300% or more, more preferably 400% or more, still more preferably 500% or more, and even more preferably 530% or more, from the viewpoint of ensuring good elongation property. The upper limit of the tensile elongation at break is not particularly limited, but is, for example, 1,000% from the viewpoint of ease of production. In other words, the tensile elongation at break of the hydrogenated block copolymer is preferably 300 to 1,000%.

More specifically, the tensile elongation at break is measured in accordance with the method described in Examples.

From the viewpoint of flexibility at a low temperature, a shear storage modulus G' at -40°C of the hydrogenated product of the block copolymer, which is measured by a complex shear viscosity test under the condition of a frequency of 1 Hz in accordance with JIS K 7244-10 (2005), is preferably 200 MPa or less, more preferably 100 MPa or less, still more preferably 50 MPa or less, even more preferably 25 MPa or less, particularly preferably 15 MPa or less, and most preferably 10 MPa or less. The lower limit of the shear storage modulus G' is not particularly limited, and is, for example, 0.1 MPa from the viewpoint of mechanical strength. In other words, the shear storage modulus G' at -40°C of the hydrogenated block copolymer is preferably 0.1 to 200 MPa.

More specifically, the shear storage modulus G' is measured in accordance with the method described in Examples.

The peak top intensity of the loss tangent tan δ of the hydrogenated block copolymer, which is measured in accordance with JIS K 7244-10 (2005) under conditions of a strain amount of 1%, a frequency of 1 Hz, a measurement temperature of -80 to 0°C, a temperature increase rate of 3°C/min, and a shear mode, is such that the larger the numerical value, the more excellent the flexibility at a low temperature, and in a case where the numerical value is 0.3 or more, sufficient flexibility at a low temperature can be obtained. The peak top intensity of tan δ is preferably 0.3 or more, more preferably 0.5 or more, and still more preferably 0.6 or more.

In addition, the peak top temperature of the loss tangent tan δ of the hydrogenated block copolymer, which is measured in accordance with JIS K 7244-10 (2005) under conditions of a strain of 1%, a frequency of 1 Hz, a measurement temperature of -80 to 0°C, a temperature increase rate of 3°C/min, and a shear mode, is preferably -40°C or lower, more preferably -45°C or lower, and still more preferably -50°C or lower from the viewpoint of ensuring sufficient flexibility and rubber elasticity in a low temperature region. The lower limit of the peak top temperature of the loss tangent tan δ is not particularly limited, but is, for example, -70°C from the viewpoint of ease of production. In other words, the peak top temperature of the loss tangent tan δ of the hydrogenated block copolymer is preferably -70 to -40°C.

The peak top intensity of tan δ is a value of tan δ at which the peak of tan δ is maximized. Further, the peak top temperature of tan δ is a temperature at which the peak of tan δ is maximized. The peak top temperature of tan δ and the peak top intensity of tan δ of the hydrogenated product of the block copolymer are specifically measured by the method described in Examples.

In order to make these values fall within the above ranges, for example, the ratio of isoprene as a monomer for constituting the polymer block (B) may be adjusted.

### [Resin Composition]

A first embodiment of the resin composition of the present invention is a resin composition containing the above-described hydrogenated product of a block copolymer as a component (a); and one or more oil components selected from the group consisting of a mineral oil, a vegetable oil, and an ethylene/α-olefin copolymerized oligomer as a component (b), in which a content ratio (a)/(b) of the component (a) to the component (b) is 1/99 to 99/1 in terms of mass ratio.

**In** one aspect, the total content of the component (a) and the component (b) in the composition is preferably 50% by mass or more, more preferably 60% by mass or more, still more preferably 80% by mass or more, particularly preferably 90% by mass or more, and most preferably 95% by mass or more.

Examples of the mineral oil include paraffin-based oil, naphthene-based oil, and aromatic oil. Examples of the vegetable oil include peanut oil and rosin.

When the resin composition contains the hydrogenated block copolymer as the component (a) and the oil component as the component (b), the resin composition can have high strength and oil retainability even in a low temperature region of about -20°C or lower.

The content ratio (a)/(b) of the component (a) to the component (b) in the resin composition is preferably 1/99 to 80/20, more preferably 3/97 to 70/30, still more preferably 4/96 to 60/40, and even more preferably 5/95 to 55/45 in terms of mass ratio from the viewpoint of achieving both mechanical properties and low-temperature characteristics of the resin composition.

A second embodiment of the resin composition of the present invention is a resin composition containing the above-described hydrogenated product of a block copolymer as a component (a); and one or more selected from the group consisting of polyethylene, polypropylene, styrene-based resin, polyphenylene ether, polyester resin, polycarbonate, polyacetal, polyamide, polyarylene sulfide, polyarylate, polyimide, polyether ether ketone, and liquid crystal polyester as a component (c), in which a content ratio (a)/(c) of the component (a) to the component (c) is 1/99 to 99/1 in terms of mass ratio.

In one aspect, the total content of the component (a) and the component (c) in the resin composition is preferably 50% by mass or more, more preferably 60% by mass or more, still more preferably 80% by mass or more, even more preferably 85% by mass or more, particularly preferably 90% by mass or more, and most preferably 95% by mass or more.

By the resin composition containing the hydrogenated block copolymer described above as the component (a), the impact resistance and the heat shock resistance can be improved compared to the component (c), which is the resin component before the addition of the component (a), in a low temperature region near or below -20°C as compared to the component (c).

The content ratio (a)/(c) of the component (a) to the component (c) in the resin composition is preferably 1/99 to 50/50, more preferably 3/97 to 30/70, still more preferably 4/96 to 25/75, and even more preferably 5/95 to 20/80 in terms of mass ratio from the viewpoint of achieving both mechanical properties and low-temperature characteristics of the resin composition.

When the resin composition containing the component (a) and the component (c) is used in applications where impact resistance is emphasized, it is more preferable to further contain an ethylene-α-olefin copolymer rubber (d).

### <Ethylene-α-Olefin Copolymer Rubber (d)>

The ethylene-α-olefin copolymer rubber (d) is a copolymer of ethylene and an α-olefin.

### (α-Olefin)

The α-olefin constituting the ethylene-α-olefin copolymer rubber (d) is not particularly limited, and examples thereof include α-olefins having 3 to 20 carbon atoms (hereinafter referred to as "C3 to C20"). The α-olefins of C3 to C20 may have either a linear structure or a branched structure, and examples thereof include propylene, 1-butene, 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentene, vinylcyclohexene, and vinylnorbornene. These may be used alone, or two or more kinds thereof may be used in combination. Among these, from the viewpoint of impact resistance and tensile elongation at break, α-olefin comonomers of C4 to C8 are preferable, at least one selected from the group consisting of propylene, **1-**butene, 1-hexene, 4-methyl-1-pentene, and 1-octene is more preferable, and from the viewpoint of impact resistance, at least one selected from the group consisting of propylene, 1-butene, and 1-octene is still more preferable, and 1-octene is particularly preferable. On the other hand, from the viewpoint of moldability, at least one selected from the group consisting of propylene, 1-butene, and 1-octene is still more preferable, and propylene is particularly preferable. In the case where the α-olefin constituting the ethylene-α-olefin copolymer rubber (d) is propylene and the component (c) is polypropylene, it is also a preferred aspect that the polypropylene as the component (c) is prepared by multistage polymerization. More specifically, it is also one of the preferred aspects of the present invention that an isotactic polypropylene resin is polymerized in the former stage of polymerization, an ethylene-propylene copolymer is polymerized in the latter stage, and then these are mixed.

The content of the α-olefin in the ethylene-α-olefin copolymer rubber (d) is not particularly limited, but is preferably 5 to 50% by mass, and more preferably 20 to 45% by mass. When the content of the α-olefin in the ethylene-α-olefin copolymer rubber (d) is the lower limit value or more, low temperature curing resistance and the flexibility tend to be good, and when the content is the upper limit value or less, the rigidity tends to be good.

As the ethylene-α-olefin copolymer rubber (d), two or more kinds of ethylene-α-olefin copolymer rubbers may be used. In this case, from the viewpoint of further improving impact resistance, tensile elongation at break, and rigidity, for example, two or more kinds of ethylene-α-olefin copolymer rubbers having different densities may be used in combination.

The melt flow rate value (MFR) of the ethylene-α-olefin copolymer rubber (d) is not particularly limited, but is preferably 0.1 to 50 g/10 minutes, and more preferably 0.3 to 35 g/10 minutes. When the melt flow rate value (MFR) of the ethylene-α-olefin-copolymer rubber (d) is the lower limit value or more, the processability tends to be good, and when it is the upper limit value or less, the mechanical properties tend to be good.

The molecular weight distribution (Mw/Mn; Mw is the weight average molecular weight, and Mn is the number average molecular weight) of the ethylene-α-olefin copolymer rubber (d) is not particularly limited, but is preferably 1.3 to 5.0.

The density of the ethylene-α-olefin copolymer rubber (d) is not particularly limited, but is preferably 0.850 to 0.910 g/cm³, and more preferably 0.855 to 0.885 g/cm³. When the density of the ethylene-α-olefin copolymer rubber (d) is the lower limit value or more, the rigidity tends to be good, and when the density is the upper limit value or less, the impact resistance and the tensile elongation at break tend to be good.

The catalyst used in the preparation of the ethylene-α-olefin copolymer rubber (d) is not particularly limited, and examples thereof include a catalyst capable of easily obtaining an α-olefin copolymer having a high molecular weight under processing conditions (for example, a catalyst based on titanium, metallocene, or vanadium). These may be used alone, or two or more kinds thereof may be used in combination. Among these, a metallocene catalyst and titanium chloride are preferable from the viewpoint of stability of structure control.

The polymerization form of the ethylene-α-olefin copolymer rubber (d) is not particularly limited, and a random copolymer of ethylene and an α-olefin, a block copolymer of ethylene and an α-olefin, and the like can be used. Specific examples thereof include, but are not limited to, "TAFMER (registered trademark)" manufactured by Mitsui Chemicals, Inc. as a random copolymer rubber of ethylene and 1-butene, "ENGAGE (registered trademark)" manufactured by Dow Chemical Company as a random copolymer rubber of ethylene and 1-octene, and "INFUSE (registered trademark)" manufactured by Dow Chemical Company as a block copolymer rubber of ethylene and 1-octene.

The content of the ethylene-α-olefin copolymer rubber (d) in the resin composition is not particularly limited, but is preferably 1 to 50 parts by mass, more preferably 5 to 40 parts by mass, still more preferably 8 to 30 parts by weight, and particularly preferably 10 to 20 parts by mass, with respect to 100 parts by mass of the component (c). When the content of the ethylene-α-olefin copolymer rubber (d) is the lower limit value or more, the impact resistance and the tensile elongation at break tend to be good, and when the content is the upper limit value or less, the rigidity tends to be good.

When the resin composition contains the component (a), the component (c), and the component (d), the resin composition more preferably contains polyethylene as the component (c) from the viewpoint of the balance between the rigidity and the impact resistance. The polyethylene is not particularly limited, and examples thereof include polyethylenes such as low density polyethylene (LDPE), linear low density polyethylene (LLDPE), medium density polyethylene (MDPE), and high density polyethylene (HDPE). These may be used alone, or two or more kinds thereof may be used in combination. Among these, polyethylenes such as medium density polyethylene (MDPE) and high density polyethylene (HDPE) are preferable, and high density polyethylene (HDPE) is particularly preferable, from the viewpoint of obtaining higher rigidity while maintaining the impact resistance of the resin composition.

When the resin composition contains polyethylene, the content of polyethylene in the resin component of the resin composition is not particularly limited, but is preferably 30% by mass or less, more preferably 25% by mass or less, still more preferably 22% by mass or less, and particularly preferably 20% by mass or less, and is preferably 1% by mass or more, more preferably 3% by mass or more, still more preferably 5% by mass or more, and particularly preferably 7% by mass or more, from the viewpoint of impact resistance, tensile elongation at break, and rigidity.

The resin composition may contain, as resin components other than the components (a) to (d), hydrogenated resins such as hydrogenated coumarone-indene resins, hydrogenated rosin resins, hydrogenated terpene resins, and alicyclic hydrogenated petroleum resins; tackifier resins such as aliphatic resins comprising olefin and diolefin polymers; and other polymers such as hydrogenated polyisoprene, hydrogenated polybutadiene, butyl rubber, polyisobutylene, and polybutene, as long as the effect of the present invention is not impaired.

When the resin composition contains a resin component other than the components (a) to (d), the content of the component other than the components (a) to (d) in the composition is not particularly limited, but is preferably 50% by mass or less. In this case, the content of the hydrogenated block copolymer according to an embodiment of the present invention in the composition is preferably 50% by mass or more, more preferably 60% by mass or more, still more preferably 80% by mass or more, particularly preferably 90% by mass or more, and most preferably 95% by mass or more, from the viewpoint of impact resistance at a low temperature and rubber elasticity.

### <Additive>

Examples of components other than the resin component that can be contained in the resin composition include, but are not particularly limited to, additives such as antioxidants, ultraviolet absorbers, light stabilizers, heat shielding materials, antiblocking agents, pigments, dyes, softening agents, crosslinking agents, crosslinking auxiliary agents, crosslinking accelerators, fillers, reinforcing materials, lubricants, antistatic agents, flame retardants, foaming agents, water repellents, waterproofing agents, electrical conductivity-imparting agents, thermal conductivity-imparting agents, electromagnetic wave-shielding property-imparting agents, fluorescent agents, and antibacterial agents. These may be used alone or in combination of two or more kinds thereof.

Examples of the antioxidant include a phenol-based antioxidant, a phosphorus-based antioxidant, and a sulfur-based antioxidant.

As the ultraviolet absorber, in addition to benzotriazole-based ultraviolet absorbers, hindered amine-based ultraviolet absorbers, benzoate-based ultraviolet absorbers and the like, triazine-based compounds, benzophenone-based compounds, malonic ester compounds, oxalic acid anilide compounds, and the like can be used.

Examples of the light stabilizer include hindered amine-based light stabilizers.

Examples of the heat shielding material include a material in which heat ray shielding particles having a heat ray shielding function and an organic dye compound having a heat ray shielding function are contained in glass. Examples of the particles having a heat ray shielding function include particles of oxides such as tin-doped indium oxides, antimony-doped tin oxides, aluminum-doped zinc oxides, tin-doped zinc oxides, and silicon-doped zinc oxides; and particles of inorganic materials having a heat ray shielding function such as LaB₆ (lanthanum hexaboride) particles. Examples of the organic dye compound having a heat ray shielding function include diimmonium-based dyes, aminium-based dyes, phthalocyanine-based dyes, anthraquinone-based dyes, polymethine-based dyes, benzenedithiol-type ammonium-based compounds, thiourea derivatives, and thiol metal complexes.

Examples of the antiblocking agent include inorganic particles and organic particles. Examples of the inorganic particles include oxides, hydroxides, sulfides, nitrides, halides, carbonates, sulfates, acetates, phosphates, phosphites, organic carboxylates, silicates, titanates, and borates of Groups IA, IIA, IVA, VIA, VIIA, VIIIA, IB, IIB, IIIB, and IVB elements, hydrated compounds thereof, and composite compounds and natural mineral particles mainly containing them.

Examples of the pigment include organic pigments and inorganic pigments. Examples of the organic pigments include azo pigments, quinacridone pigments, and phthalocyanine pigments. Examples of the inorganic pigment include titanium oxide, zinc oxide, zinc sulfide, carbon black, a lead-based pigment, a cadmium-based pigment, a cobalt-based pigment, an iron-based pigment, a chromium-based pigment, ultramarine blue, and Prussian blue.

Examples of the dye include azo dyes, anthraquinone dyes, phthalocyanine dyes, quinacridone dyes, perylene dyes, dioxazine dyes, anthraquinone dyes, indolinone dyes, isoindolinone dyes, quinoneimine dyes, triphenylmethane dyes, thiazole dyes, nitro dyes, and nitroso dyes.

As the softening agent, known softening agents such as phosphate ester; low molecular weight polyethylene glycol; hydrocarbon-based synthetic oils such as liquid polybutene, liquid polyisoprene or a hydrogenated product thereof, and liquid polybutadiene or a hydrogenated product thereof can be used. These may be used alone or in combination of two or more kinds thereof.

Examples of the crosslinking agent include radical generators, sulfur, and sulfur compounds.

Examples of the radical generator include dialkyl monoperoxides such as dicumyl peroxide, di-t-butyl peroxide, and t-butyl cumyl peroxide; diperoxides such as 2,5-dimethyl-2,5-di(t-butylperoxy)hexane, 2,5-dimethyl-2,5-di(t-butylperoxy)hexyne-3, bis(t-butyldioxyisopropyl)benzene, 1,1-bis(t-butylperoxy)-3,3,5-trimethylcyclohexane, and n-butyl-4,4-bis(t-butylperoxy)valerate; benzoyl group-containing peroxides such as benzoyl peroxide, p-chlorobenzoyl peroxide, and 2,4-dichlorobenzoyl peroxide; monoacylalkyl peroxides such as t-butyl peroxybenzoate; percarbonates such as t-butylperoxy isopropyl carbonate; and organic peroxides such as diacyl peroxides such as diacetyl peroxide and lauroyl peroxide. These may be used alone, or two or more kinds thereof may be used in combination. Among these, 2,5-dimethyl-2,5-di(t-butylperoxy)hexane and dicumyl peroxide are preferable from the viewpoint of reactivity.

Examples of the sulfur compound include sulfur monochloride and sulfur dichloride.

As the crosslinking agent, a combination of p-quinone dioxime and lead dioxide, a combination of p,p'-dibenzoylquinone dioxime and trilead tetroxide, and the like can also be used.

As the crosslinking auxiliary agent, a known crosslinking auxiliary agent can be used, and examples thereof include polyfunctional monomers such as trimethylolpropane trimethacrylate, trimethylolpropane triacrylate, trimellitic acid triallyl ester, 1,2,4-benzenetricarboxylic acid triallyl ester, triallyl isocyanurate, 1,6-hexanediol dimethacrylate, 1,9-nonanediol dimethacrylate, 1,10-decanediol dimethacrylate, polyethylene glycol dimethacrylate, ethylene glycol dimethacrylate, diethylene glycol dimethacrylate, triethylene glycol dimethacrylate, divinylbenzene, glycerol dimethacrylate, and 2-hydroxy-3-acryloyloxypropyl methacrylate; stannous chloride, ferric chloride, organic sulfonic acid, polychloroprene, and chlorosulfonated polyethylene. As the crosslinking auxiliary agent, one type may be used alone, or two or more types may be used in combination.

Examples of the crosslinking accelerator include thiazoles such as N,N-diisopropyl-2-benzothiazole-sulfenamide, 2-mercaptobenzothiazole, and 2-(4-morpholinodithio)benzothiazole; guanidines such as diphenylguanidine and triphenylguanidine; aldehyde-amine-based reactants or aldehyde-ammonia-based reactants such as butylaldehyde-aniline reactant and hexamethylenetetramine-acetaldehyde reactant; imidazolines such as 2-mercaptoimidazoline; thioureas such as thiocarbanilide, diethylurea, dibutylthiourea, trimethylthiourea, and diorthotolylthiourea; dibenzothiazyl disulfide; thiuram monosulfides or thiuram polysulfides such as tetramethylthiuram monosulfide, tetramethylthiuram disulfide, and pentamethylenethiuram tetrasulfide; thiocarbamates such as zinc dimethyldithiocarbamate, zinc ethylphenyldithiocarbamate, sodium dimethyldithiocarbamate, selenium dimethyldithiocarbamate, and tellurium diethyldithiocarbamate; xanthates such as zinc dibutylxanthate; and zinc white. As the crosslinking accelerator, one type may be used alone, or two or more types may be used in combination.

Examples of the filler include inorganic fillers such as talc, clay, mica, calcium silicate, glass, hollow glass spheres, glass fibers, calcium carbonate, magnesium carbonate, basic magnesium carbonate, aluminum hydroxide, magnesium hydroxide, calcium hydroxide, zinc borate, dawsonite, ammonium polyphosphate, calcium aluminate, hydrotalcite, silica, diatomaceous earth, alumina, titanium oxide, iron oxide, zinc oxide, magnesium oxide, tin oxide, antimony oxide, barium ferrite, strontium ferrite, carbon fibers, activated carbon, hollow carbon spheres, calcium titanate, lead zirconate titanate, and silicon carbide; organic fillers such as wood flour and starch; conductive fillers such as carbon black, graphite, and carbon nanotubes; and metal fillers such as silver powder, copper powder, nickel powder, tin powder, copper fibers, stainless steel fibers, aluminum fibers, and iron fibers. Among these, from the viewpoint of the balance between rigidity and impact resistance, talc, calcium carbonate, glass fiber, and carbon fiber are preferable, and talc and glass fiber are more preferable. When the resin composition contains a filler, the content thereof is not particularly limited, but is preferably 5 to 30 parts by mass, more preferably 10 to 25 parts by mass, and particularly preferably 15 to 23 parts by mass with respect to 100 parts by mass of the total of the resin components in the resin composition. When the content of the filler is the lower limit value or more, the rigidity and the impact resistance tend to be good, and when the content is the upper limit value or less, the impact resistance and the tensile elongation at break tend to be good.

The content of the additive contained in the resin composition is not particularly limited, and can be appropriately adjusted according to the type of the additive and the like. When the resin composition contains the additive, the content of the additive may be, for example, 50% by mass or less, 45% by mass or less, or 30% by mass or less, or may be 0.01% by mass or more, 0.1% by mass or more, or 1% by mass or more, relative to the total mass of the resin composition. In other words, the content of the additive is preferably 0.01 to 50% by mass, relative to the total mass of the resin composition.

### <Physical Properties of Resin Composition>

### (Tensile Strength)

The tensile strength of the resin composition can be, for example, 0.10 MPa or more, 0.20 MPa or more, 0.30 MPa or more, or even 0.40 MPa or more. The upper limit of the tensile strength is not particularly limited, but is usually 50.0 MPa or less, and may be 1.0 MPa or less. In other words, the tensile strength of the resin composition is, for example, 0.10 to 50.0 MPa. When the tensile strength of the resin composition is within the above range, a resin composition having good mechanical properties can be obtained.

The tensile strength in the description herein refers to a value measured by a method in accordance with JIS K 6251 (2017), and specifically refers to a value measured by a measurement method described in Examples.

### (Tensile Properties)

As the tensile properties of the resin composition, the tensile modulus can be, for example, 100 MPa or more, 350 MPa or more, 500 MPa or more, or even 700 MPa or more. The upper limit of the tensile modulus is not particularly limited, but is usually 2,000 MPa or less, and may be 1,000 MPa or less.

As the tensile properties of the resin composition, the yield point stress can be, for example, 5 MPa or more, 10 MPa or more, 15 MPa or more, or even 20 MPa or more. The upper limit of the yield point stress is not particularly limited, but is usually 60 MPa or less, and may be 50 MPa or less.

As the tensile properties of the resin composition, the tensile elongation at break at 23°C can be, for example, 100% or more, 200% or more, 300% or more, or even 400% or more. The upper limit of the tensile elongation at break at 23°C is not particularly limited, but is usually 1,000% or less, and may be 600% or less.

Further, the tensile elongation at break at -20°C can be, for example, 30% or more, 50% or more, 70% or more, or even 100% or more. The upper limit of the tensile elongation at break at -20°C is not particularly limited, but is usually 350% or less, and may be 300% or less.

When the tensile properties of the resin composition are within the above ranges, a resin composition having good mechanical properties can be obtained.

The tensile properties in the description herein refer to values measured by a method in accordance with JIS K 7161 (2014), and specifically refer to values measured by a measurement method described in Examples.

The oil retention rate of the resin composition is preferably as high as possible, and is, for example, 50% or more, preferably 60% or more, and more preferably 70% or more at both normal temperature and low temperature. The upper limit of the oil retention rate is not particularly limited, but is usually 95% or less, and may be 90% or less. When the oil retention rate of the resin composition is within the above range, high stability can be exhibited during long-term storage.

The oil retention rate in the description herein refers to a value calculated by placing a resin composition having a predetermined size at a predetermined temperature for a predetermined period of time and measuring a change in weight thereof, and specifically refers to a value measured by a measurement method described in Examples.

The Charpy impact strength of the resin composition can be, for example, 5 kJ/m² or more, 10 kJ/m² or more, 15 kJ/m² or more, or even 20 kJ/m² or more. The upper limit of the Charpy impact strength is not particularly limited, but is usually 80 kJ/m² or less, and may be 70 kJ/m² or less. When the Charpy impact strength of the resin composition falls within the above range, the resin composition is less likely to be broken by impact.

The Charpy impact strength in the description herein refers to a value measured by an impact strength measuring device for a test piece prepared based on JIS K 7111-1 (2012), and specifically refers to a value measured by a measurement method described in Examples.

The flexural strength of the resin composition can be, for example, 10 MPa or higher, 15 MPa or higher, 18 MPa or higher, or even 20 MPa or higher. The upper limit of the flexural strength is not particularly limited, but is usually 50 MPa or lower, and may be 40 MPa or lower.

The flexural modulus of the resin composition can be, for example, 500 MPa or higher, 700 MPa or higher, 800 MPa or higher, or even 900 MPa or higher. The upper limit of the flexural modulus is not particularly limited, but is usually 1,500 MPa or lower, and may be 1,200 MPa or lower.

When the flexural strength and the flexural modulus of the resin composition are within the above ranges, a resin composition having good mechanical properties can be obtained.

The flexural strength and the flexural modulus in the description herein refer to values measured in accordance with JIS K 7171 (ISO 178), and specifically refer to values measured by a measurement method described in Examples.

The melt flow rate value (MFR) of the resin composition at 23°C and a load of 2.16 kg as measured in accordance with JIS K 7210:2014 can be, for example, 2.5 g/10 min or more, 3.0 g/10 min or more, 3.5 g/10 min or more, or even 4.0 g/10 min or more. The upper limit of the MFR is not particularly limited, but is usually 20 g/10 min or less, and may be 10 g/10 min or less. When the MFR of the resin composition is within the above range, good fluidity can be secured.

The MFR in the description herein refers to a value measured in accordance with JIS K 7210:2014, and specifically refers to a value measured by a measurement method described in Examples.

### [Gel Composition]

The gel composition according to the embodiment of the present invention contains the above-described hydrogenated product of the block copolymer of the present embodiment as a component (α) and a base oil (β). Hereinafter, the base oil (β), other components, the composition of the gel composition, the physical properties of the gel composition, and the like will be described.

### <Base Oil (β)>

Examples of the base oil (β) used in the gel composition according to the present embodiment include mineral oils, synthetic oils, and vegetable oils.

Examples of the mineral oil include paraffin-based mineral oils and naphthene-based mineral oils obtained by ordinary refining methods such as solvent refining and hydrogenation refining; waxes (gas-to-liquid waxes) produced by the Fischer-Tropsch process or the like; and mineral oils produced by isomerization of waxes.

Examples of the synthetic oil include hydrocarbon-based synthetic oil and ether-based synthetic oil. Examples of the hydrocarbon-based synthetic oil include α-olefin oligomers such as polybutene, polyisobutylene, 1-octene oligomer, 1-decene oligomer, and an ethylene-propylene copolymer, or hydrides thereof; an alkylbenzene; and an alkylnaphthalene. Examples of the ether-based synthetic oil include polyoxyalkylene glycol and polyphenyl ether.

Examples of the vegetable oil include castor oil, cottonseed oil, linseed oil, rapeseed oil, soybean oil, palm oil, coconut oil, and peanut oil.

The mineral oil, synthetic oil, and vegetable oil used as the base oil (β) are classified into Groups **I, II, III,** IV, and V in the base oil classification of the American Petroleum Institute (API).

The base oil (β) may be one selected from a mineral oil, a synthetic oil, and a vegetable oil, or a mixture of two or more mineral oils, a mixture of two or more synthetic oils, a mixture of two or more vegetable oils, or a mixture of one or more mineral oils, one or more synthetic oils, and one or more vegetable oils.

When the gel composition is used as a part or the whole of a cable filler to be described later, a mineral oil is preferable, at least one selected from a paraffin-based mineral oil and a naphthene-based mineral oil is more preferable from the viewpoint of obtaining a gel composition having a viscosity suitable as a filler for a cable even when the blending ratio of the hydrogenated block copolymer as the component (α) in the gel composition is small, and further a paraffin-based mineral oil is still more preferable from the viewpoint of improving the dropping point of the gel composition by making the polymer block (A) in the hydrogenated block copolymer difficult to be plasticized. Further, paraffin-based mineral oils classified into Group II and Group **III** are preferred because they have a low sulfur content and a high saturated content, and the mineral oils classified into Group II are particularly preferred.

When the gel composition is used as a part or the whole of a cosmetic, the base oil (β) may be one selected from a mineral oil, a synthetic oil, and a vegetable oil, or may be a mixture of two or more mineral oils, a mixture of two or more synthetic oils, a mixture of two or more vegetable oils, or a mixture of one or more mineral oils, one or more synthetic oils, and one or more vegetable oils, but a mineral oil or a synthetic oil of Groups **III,** IV, and V is preferred from the viewpoint of purity.

Further, poly-α-olefin (abbreviation: PAO) classified into Group IV can also be used.

When the gel composition is used as a part or the whole of a lubricating oil, the base oil (β) may be one selected from a mineral oil, a synthetic oil, and a vegetable oil, or may be a mixture of two or more mineral oils, a mixture of two or more synthetic oils, a mixture of two or more vegetable oils, or a mixture of one or more mineral oils, one or more synthetic oils, and one or more vegetable oils, but a mineral oil is preferred from the viewpoint of economic efficiency.

When the gel composition is used as a part or the whole of a grease, the base oil (β) may be one selected from a mineral oil, a synthetic oil, and a vegetable oil, or may be a mixture of two or more mineral oils, a mixture of two or more synthetic oils, a mixture of two or more vegetable oils, or a mixture of one or more mineral oils, one or more synthetic oils, and one or more vegetable oils. However, the base oils classified into Group I, Group II, and Group III are preferable because the raw materials are easily available, the base oils classified into Group II and Group III are more preferable because the sulfur content is low and the saturated content is high, and the base oils classified into Group II and Group III are still more preferably mineral oils classified into Group II and Group III, and even more preferably mineral oils classified into Group II.

Further, poly-α-olefin (abbreviation: PAO) classified into Group IV can also be used.

The kinematic viscosity at 40°C of the base oil (β) can be appropriately selected in accordance with the use of a grease composition to be obtained and the like, but is preferably 5 to 1,000 mm²/s, more preferably 10 to 500 mm²/s, still more preferably 20 to 200 mm²/s, and particularly preferably 25 to 50 mm²/s.

When the gel composition is used as a part or the whole of the grease, the content of the base oil (β) is preferably 70 to 99% by mass, more preferably 75 to 99% by mass, still more preferably 80 to 99% by mass, and particularly preferably 85 to 99% by mass in 100% by mass of the total amount of the gel composition.

The base oil (β) preferably contains paraffin or a combination of paraffin and naphthene, and the mass ratio of paraffin to naphthene [paraffin/naphthene] is preferably 10/90 to 100/0. When the mass ratio of paraffin to naphthene is within the above range, the polymer block (A) in the hydrogenated block copolymer is less likely to be plasticized.

When the gel composition according to the present embodiment is used as a part or the whole of the cable filler, from the viewpoint of improving the dropping point of the gel composition, the mass ratio of paraffin to naphthene [paraffin/naphthene] is preferably 10/90 to 90/10, more preferably 20/80 to 90/10, still more preferably 30/70 to 90/10, even more preferably 40/60 to 90/10, even more preferably 50/50 to 90/10, even more preferably 60/40 to 90/10, and particularly preferably 60/40 to 80/20.

When the gel composition according to the present embodiment is used as a part or the whole of the cosmetic or the lubricating oil, the base oil (β) preferably contains paraffin or a combination of paraffin and naphthene, and the mass ratio of paraffin to naphthene [paraffin/naphthene] is preferably 10/90 to 100/0, more preferably 20/80 to 100/0, still more preferably 30/70 to 100/0, even more preferably 40/60 to 100/0, even more preferably 50/50 to 100/0, even more preferably 60/40 to 100/0, and particularly preferably 70/30 to 100/0.

When the gel composition according to the present embodiment is used as a part or the whole of the grease, the mass ratio of paraffin to naphthene [paraffin/naphthene] is preferably 10/90 to 100/0, more preferably 20/80 to 100/0, still more preferably 30/70 to 100/0, even more preferably 40/60 to 100/0, even more preferably 50/50 to 100/0, even more preferably 60/40 to 100/0, even more preferably 70/30 to 100/0, and particularly preferably 70/30 to 90/10, from the viewpoint of availability of the base oil (β), economic efficiency, and oxidation stability of the grease.

The viscosity index of the base oil (β) is preferably 70 or more, more preferably 80 or more, still more preferably 90 or more, and particularly preferably 100 or more, and is preferably 150 or less, more preferably 145 or less, still more preferably 140 or less, even more preferably 135 or less, and particularly preferably less than 120.

### <Other Components>

The gel composition according to the present embodiment may contain other components such as an antioxidant, a surfactant, a pour point depressant, an antifoaming agent, a gelling agent, a viscosity index improver, a thickener, a water absorbent, a flame retardant, a filler, a tackifier resin, a thixotrope agent, a petroleum wax, a metal deactivator, a copper passivating agent, a friction modifier, a rust inhibitor, a detergent dispersant, an extreme pressure agent, and a thickening agent, as necessary. These additives may be used alone or may be used in combination of two or more kinds thereof.

When the gel composition as a grease contains a thickening agent, the content of the thickening agent in the gel composition can be appropriately adjusted so that the worked penetration, worked stability, oil separation degree, and aqueous water resistance of the grease are in desired ranges, and is preferably 1 to 40% by mass, more preferably 2 to 30% by mass, still more preferably 3 to 20% by mass, even more preferably 4 to 18% by mass, even more preferably 5 to 16% by mass, and particularly preferably 6 to 12% by mass. When the content of the thickening agent in the gel composition is within the above range, the balance between the performance and economic efficiency of the grease tends to be excellent.

### <Content of Hydrogenated Block Copolymer>

The content of the hydrogenated block copolymer as the component (α) in the gel composition according to the present embodiment is preferably 0.10 to 30.00 parts by mass, more preferably 0.25 to 27.00 parts by mass, still more preferably 0.50 to 25.00 parts by mass, even more preferably 0.75 to 23.00 parts by mass, even more preferably 0.75 to 20.00 parts by mass, and particularly preferably 0.75 to 18.00 parts by mass, with respect to 100 parts by mass of the total of the hydrogenated block copolymer and the base oil (β).

When the gel composition according to the present embodiment is used as a cable filler, the content of the hydrogenated block copolymer as the component (α) in the gel composition is preferably 1 to 20 parts by mass, more preferably 2 to 18 parts by mass, still more preferably 4 to 16 parts by mass, even more preferably 6 to 14 parts by mass, and particularly preferably 7 to 13 parts by mass, with respect to 100 parts by mass of the total of the hydrogenated block copolymer and the base oil (β). When the content of the hydrogenated block copolymer (a) in the gel composition is within the above range, it becomes easy to fill the gel composition as a filler for a cable into a protective tube or a cable during the production of the cable.

Further, when the gel composition according to the present embodiment is used as a cosmetic, the content of the hydrogenated block copolymer as the component (α) in the gel composition is preferably in the same range as in the case where the gel composition is used as a cable filler. When the content of the hydrogenated block copolymer in the gel composition is within the above range, it becomes easy to fill a container with the cosmetic composition or use the cosmetic composition during the production of the cosmetic.

When the gel composition according to the present embodiment is used as a lubricating oil, the suitable content of the hydrogenated block copolymer as the component (α) in the gel composition is preferably 0.1 to 10.0 parts by mass, more preferably 0.2 to 5.0 parts by mass, still more preferably 0.3 to 4.0 parts by mass, even more preferably 0.4 to 3.0 parts by mass, and particularly preferably 0.5 to 2.0 parts by mass, with respect to 100 parts by mass of the total of the hydrogenated block copolymer and the base oil (β). When the content of the hydrogenated block copolymer in the gel composition is within the above range, the balance between the performance and economic efficiency of the lubricating oil tends to be excellent.

When the gel composition according to the present embodiment is used as a grease, the suitable content of the hydrogenated block copolymer as the component (α) in the gel composition is preferably 0.1 to 10.0 parts by mass, more preferably 0.2 to 5.0 parts by mass, still more preferably 0.2 to 4.5 parts by mass, even more preferably 0.3 to 4.0 parts by mass, even more preferably 0.5 to 4.0 parts by mass, even more preferably 1.0 to 4.0 parts by mass, even more preferably 1.5 to 4.0 parts by mass, and particularly preferably 1.8 to 3.5 parts by mass, with respect to 100 parts by mass of the total of the hydrogenated block copolymer and the base oil (β). When the content of the hydrogenated block copolymer in the gel composition is within the above range, the balance between the performance and economic efficiency of the grease tends to be excellent.

### <Content of Base Oil (β)>

The content of the base oil (β) in the gel composition is preferably 70.00 parts by mass or more, more preferably 73.00 parts by mass or more, still more preferably 75.00 parts by mass or more, and particularly preferably 77.00 parts by mass or more, and the upper limit thereof is preferably 99.90 parts by mass, more preferably 99.75 parts by mass, still more preferably 99.50 parts by mass, and particularly preferably 99.25 parts by mass, with respect to 100 parts by mass of the total of the hydrogenated block copolymer as the component (α) and the base oil (β).

When the gel composition according to the present embodiment is used as a cable filler, the content of the base oil (β) in the gel composition is preferably 80 parts by mass or more, more preferably 83 parts by mass or more, and particularly preferably 86 parts by mass or more, and the upper limit thereof is preferably 99 parts by mass or less, more preferably 97 parts by mass or less, and particularly preferably 94 parts by mass or less, with respect to 100 parts by mass of the total of the hydrogenated block copolymer as the component (α) and the base oil (β). When the content of the base oil (β) in the gel composition is within the above range, the gel composition can be easily filled in a protective tube or a cable when the gel composition is used as a filler for a cable during the production of the cable.

When the gel composition according to the present embodiment is used as a cosmetic, the content of the base oil (β) in the gel composition is preferably 80 parts by mass or more, more preferably 83 parts by mass or more, and particularly preferably 86 parts by mass or more, and the upper limit thereof is preferably 99 parts by mass or less, more preferably 97 parts by mass or less, and particularly preferably 94 parts by mass or less, with respect to 100 parts by mass of the total of the hydrogenated block copolymer as the component (α) and the base oil (β). When the content of the base oil (β) in the gel composition is within the above range, it becomes easy to fill a container with the cosmetic composition or use the cosmetic composition during the production of the cosmetic.

When the gel composition according to the present embodiment is used as a lubricating oil, the content of the base oil (β) in the gel composition is preferably 90 parts by mass or more, more preferably 95 parts by mass or more, and particularly preferably 96 parts by mass or more, and the upper limit thereof is preferably 99.9 parts by mass or less, more preferably 99.8 parts by mass or less, and particularly preferably 99.7 parts by mass or less, with respect to 100 parts by mass of the total of the hydrogenated block copolymer as the component (α) and the base oil (β). When the content of the base oil (β) in the gel composition is within the above range, the balance between the performance and economic efficiency of the lubricating oil tends to be excellent.

When the gel composition according to the present embodiment is used as a grease, the content of the base oil (β) in the gel composition is preferably 90.0 parts by mass or more, more preferably 95.0 parts by mass or more, and particularly preferably 96.0 parts by mass or more, and the upper limit thereof is preferably 99.9 parts by mass or less, more preferably 99.8 parts by mass or less, and particularly preferably 99.7 parts by mass or less, with respect to 100 parts by mass of the total of the hydrogenated block copolymer (a) and the base oil (β). When the content of the base oil (β) in the gel composition is within the above range, the balance between the performance and economic efficiency of the grease tends to be excellent.

### <Characteristics of Gel Composition>

### (Dropping Point)

By using the hydrogenated block copolymer of the present embodiment, the dropping point of the gel composition (the temperature at which the gel composition changes from a semi-solid state to a liquid state) can be, for example, 195°C or higher, 197°C or higher, 200°C or higher, or even 205°C or higher. The upper limit of the dropping point is not particularly limited, but is usually 400°C or lower, and may be 300°C or lower. When the dropping point of the gel composition is within the above range, the gel composition, when used as a cable filler, tends to exhibit a characteristic that the gel composition as a filler does not flow out from the inside of a protective tube or a cable under a wide range of temperature even when the protective tube is broken, and the gel composition tends to be used as a gel composition having excellent shape retainability in a wide range of applications other than cable fillers.

The dropping point in the description herein refers to a value measured by a method in accordance with JIS K 2220:2013.

### (Cone penetration)

By setting the cone penetration of the gel composition containing the hydrogenated block copolymer of the present embodiment to 360 to 430, when the gel composition according to the embodiment of the present invention is used as a cable filler, it is possible to obtain a gel composition having an appropriate hardness which can easily protect the inside. From the above viewpoint, the cone penetration of the gel composition is preferably 370 to 420, and more preferably 375 to 390.

The cone penetration in the description herein refers to a value measured by a method in accordance with JIS K 2220:2013.

### (Viscosity)

When the gel composition according to the embodiment of the present invention is used as a cable filler, the viscosity of the gel composition under a shear rate condition of 50 s⁻¹ is preferably 500 mPa·s or more, more preferably 1,000 mPa·s or more, still more preferably 2,000 mPa·s or more, even more preferably 3,000 mPa·s or more, even more preferably 3,500 mPa·s or more, and particularly preferably 4,000 mPa·s or more from the viewpoint of suppressing flowing out of the gel composition as a filler from the inside when the protective tube or cable is damaged, and is preferably 300,000 mPa·s or less, more preferably 50,000 mPa·s or less, still more preferably 30,000 mPa·s or less, and particularly preferably 20,000 mPa·s or less from the viewpoint of easily filling the gel composition into the protective tube or cable during the production of the cable.

The viscosity in the description herein refers to a value measured by a rheometer.

When the gel composition according to the present embodiment is used as a cosmetic, the viscosity of the gel composition under a shear rate condition of 50 s⁻¹ is preferably 500 mPa·s or more and 100,000 mPa·s or less, more preferably 1,000 mPa·s or more and 50,000 mPa·s or less, still more preferably 2,000 mPa·s or more and 40,000 mPa·s or less, even more preferably 4,000 mPa·s or more and 30,000 mPa·s or less, even more preferably 9,000 mPa·s or more and 30,000 mPa·s or less, and particularly preferably 15,000 mPa·s or more and 25,000 mPa·s or less, from the viewpoint of ease of filling the cosmetic composition in a container or using the cosmetic composition during the production of the cosmetic.

### (Kinematic Viscosity)

When the gel composition according to the present embodiment is used as a lubricating oil, the kinematic viscosity at 40°C thereof is preferably in the range of 40 to 300 mm²/sec, and more preferably in the range of 50 to 150 mm²/sec. On the other hand, the kinematic viscosity at 100°C is preferably in the range of 3 to 30 mm²/sec, and more preferably in the range of 4 to 20 mm²/sec. When the kinematic viscosity is within the above range, fuel consumption can be reduced. The kinematic viscosity is a value measured in accordance with JIS K 2283:2000.

### (Worked Penetration)

When the gel composition according to the present embodiment is used as a grease, the worked penetration thereof is preferably 85 to 475, more preferably 130 to 430, still more preferably 175 to 385, even more preferably 220 to 340, and particularly preferably 265 to 295. When the worked penetration is low, the thickening effect can be enhanced. The worked penetration can be measured by the method described in Examples.

### (Increase in Cone Penetration)

When the gel composition according to the present embodiment is used as a grease, the increase in cone penetration thereof is preferably 50 or less, more preferably 45 or less, still more preferably 40 or less, and particularly preferably 35 or less. When the increase in cone penetration is small, the shear stability can be increased. The increase in cone penetration is represented by the difference between the worked stability and the worked penetration. Both the worked stability and the worked penetration can be measured by the methods described in Examples.

### (Oil Separation Degree)

When the gel composition according to the present embodiment is used as a grease, the oil separation degree thereof is preferably 5.0% by mass or less, more preferably 4.0% by mass or less, and particularly preferably 3.0% by mass or less. When the oil separation degree is low, the oil retainability can be enhanced. In the description herein, the oil separation degree can be measured by the method described in Examples.

### (Washing Water Resistance)

When the gel composition according to the present embodiment is used as a grease, the washing water resistance thereof is preferably 20.0% by mass or less, more preferably 15.0% by mass or less, and particularly preferably 10.0% by mass or less. When the washing water resistance is low, a gel composition which is less likely to be softened or deteriorated in attachment due to moisture can be realized. In the description herein, the washing water resistance can be measured by the method described in Examples.

### (Viscosity Index)

When the gel composition according to the present embodiment is used as a lubricating oil, the viscosity index thereof is preferably 100 or more, more preferably 130 or more, and particularly preferably 150 or more, from the viewpoint of easily suppressing a change in viscosity due to temperature. In the description herein, the viscosity index can be measured by the method described in Examples.

### (High-Temperature High-Shear Viscosity)

When the gel composition according to the present embodiment is used as a lubricating oil, the high-temperature high-shear viscosity thereof is preferably 1.5 mPa·s or more, more preferably 2.0 mPa·s or more, and particularly preferably 2.5 mPa·s or more, from the viewpoint of easily enhancing the protection of an engine or the like. In the description herein, the high-temperature high-shear viscosity can be measured by the method described in Examples.

### (Kinematic Viscosity after Shearing)

When the gel composition according to the present embodiment is used as a lubricating oil, the kinematic viscosity thereof after shearing is preferably 5 mm²/sec or more, more preferably 7 mm²/sec or more, and particularly preferably 10 mm²/sec or more. When the kinematic viscosity after shearing is high, a gel composition in which molecular cleavage due to shearing is less likely to occur can be obtained. In the description herein, the kinematic viscosity after shearing can be measured by the method described in Examples.

### (MRV Viscosity)

When the gel composition according to the present embodiment is used as a lubricating oil, the low-temperature pumping viscosity (MRV viscosity (-30°C)) thereof is preferably 200,000 mPa·s or less, more preferably 180,000 mPa·s or less, and particularly preferably 150,000 mPa·s or less. When the MRV viscosity is low, high performance can be exhibited even in a low-temperature environment. In the description herein, the MRV viscosity can be measured by the method described in Examples.

### [Cable Filler and Cable]

The cable filler according to the embodiment of the present invention contains the gel composition according to the embodiment of the present invention described above, and may include only the gel composition. The gel composition according to the embodiment of the present invention has a preferable viscosity as a filler for a cable, can be easily filled into a protective tube or a cable during the production of the cable, has a high dropping point, exhibits a characteristic that the filler does not flow out from the inside under a wide range of temperature even when the protective tube or the cable is broken, and can prevent water from entering the inside, and therefore is suitable as an internal buffer material of cables such as an optical fiber cable and an electric wire cable.

The cable according to the embodiment of the present invention is a cable including the gel composition according to the embodiment of the present invention, and for example, the gel composition is filled between a protective tube and cables or around an optical fiber core wire in a cable. As described above, the gel composition of the present invention has sufficient elasticity to protect cables and the like, can be easily filled into a protective tube or a cable, has such a viscosity that the filler does not flow out from the inside when the protective tube or the cable is damaged, and can prevent water from entering the inside even when the protective tube or the cable is damaged. Therefore, the above-described cable can be suitably used particularly as an optical fiber cable.

### [Cosmetic]

The cosmetic according to the embodiment of the present invention contains the gel composition according to the embodiment of the present invention, and may contain only the gel composition.

The gel composition according to the embodiment of the present invention may be used for a cosmetic composition constituting the cosmetic according to the embodiment of the present invention.

Examples of the cosmetic include hair make-up products such as shampoos, hair setting gels or lotions, blow drying lotions, and fixing and styling agents; skin make-up products such as foundations, eye shadows, blushers, concealers, compact powders, and make-up bases; lip make-up products such as lipsticks, liquid lips, and lip glosses; cleansing products such as cleansing foams and make-up removers; and cream products such as petrolatum creams, hand creams, and ultrasonic diagnostic creams.

### [Lubricating Oil]

The lubricating oil according to the embodiment of the present invention contains the gel composition according to the embodiment of the present invention, and may contain only the gel composition.

The gel composition according to the embodiment of the present invention may be used for a lubricating oil composition constituting the lubricating oil according to the embodiment of the present invention. Examples of the lubricating oil include engine oils, automatic transmission fluids, gear lubricants, and hydraulic fluids.

### [Grease]

The grease according to the embodiment of the present invention contains the gel composition according to the embodiment of the present invention, and preferably contains only the gel composition.

The gel composition according to the embodiment of the present invention can be used for a grease composition constituting the grease according to the embodiment of the present invention. Examples of the grease include grease for a sliding member.

The sliding member to which the grease for a sliding member is applied is provided with the grease on its sliding surface, whereby the sliding surface slides in the presence of the grease composition. It is preferable that the sliding surface of the sliding member is coated with the grease composition.

The sliding member preferably contains at least one selected from a metal and a resin. That is, the material of the sliding member is preferably at least one selected from a metal and a resin. The sliding member may be a sliding member made of metal, a sliding member made of resin such as plastic or rubber, or a sliding member made of both metal and resin.

The sliding member is not particularly limited as long as it is a member in which grease is applied to a sliding surface, and examples thereof include sliding members for door panels, instrument panels, door locks, gears, outboard joints, inboard joints, universal joints, flexible joints, belt tensioners, fixing belts, pressure belts, pads, timing belts, conveyor belts, sunroof body seals, glass runs, weather strips, oil seals, packings, wiper blades, doctor blades, charging rollers, developing rollers, toner supply rollers, transfer rollers, heat rollers, pressure rollers, cleaning blades, paper feed rollers, conveyance rollers, intermediate transfer belts, intermediate transfer drums, heat belts, electromagnetic valves, electric valves, crankshafts, compressor shafts, slide bearings, oil pump gears, pistons, piston rings, piston pins, gaskets, guide rails, seat belt buckles, brake pads, brake pad clips, brake shims, brake insulators, hinges, screws, pressure pads, air cylinders, electric cylinders, electric actuators, and other sliding members for automobiles, copiers, printers, and industrial machines (including semiconductor manufacturing apparatuses and light emitting device/display manufacturing apparatuses).

The grease is also suitable as a grease composition for a rotational sliding member that performs rotary motion.

The rotational sliding member is not particularly limited as long as it is accompanied by rotary motion, and examples thereof include a bearing, a gear, a rotary shaft, a belt, a heat roller, and a steering roller.

The use of the sliding member is not particularly limited, and the sliding member can be used for, for example, home appliances, ships, railroads, aircrafts, machines (including industrial production apparatuses), structures, automobile repair, automobiles, architecture, building materials, fibers, leather, stationery, woodworking, furniture, miscellaneous goods, steel plates, cans, electronic substrates, electronic components, and printing. Among these, the sliding member is useful for use in automobiles and industrial machines. That is, the sliding member is preferably a component for an automobile or a component for an industrial machine.

Similarly, the above-described grease according to one aspect of the present invention can be suitably used for automobiles and industrial machines.

As described above, the grease according to one aspect of the present invention is also useful for reducing noise. Therefore, the grease can be suitably used for, for example, a machinery and equipment or a driving device including a motor, and more specifically, can be suitably used for a motor component.

### [Other Applications of Gel Composition]

**In** addition, the gel composition according to the embodiment of the present invention can be further used for an asphalt modifier, an adhesive, a pressure-sensitive adhesive, a resin modifier, a compatibilizer, a sealing material, a coating material, a molded article, a fiber/nonwoven fabric, a drilling fluid, and the like.

### [Method for Producing Hydrogenated Block Copolymer]

A method for producing a hydrogenated block copolymer according to an embodiment of the present invention includes: a first step of obtaining a block copolymer comprising a polymer block (A) containing a structural unit derived from an aromatic vinyl compound and a polymer block (B) containing a structural unit derived from butadiene and a structural unit derived from isoprene by performing a polymerization reaction using a polymerization initiator and at least an aromatic vinyl compound, butadiene, and isoprene as monomers; and a second step of hydrogenating the block copolymer.

Then, in the first step, at least one of the following elements (i) to (vi) is performed.
(i) An average feed rate when the butadiene and isoprene are fed to a reaction system is set to be 50 kg/h/mol or less.
(ii) A polymerization temperature is set to be 55 to 80°C.
(iii) A vinylating agent of 0.3% by mass or less with respect to the total mass of a raw material compound is added to the reaction system.
(iv) A time for feeding the butadiene and isoprene to the reaction system is set to be 2.5 hours or more.
(v) When an amount of the polymerization initiator charged is P (mol) and an amount of an unreacted conjugated diene monomer is Q (mol), Q/P during the polymerization of the polymer block (B) is 100 or less.
(vi) A mass ratio when the butadiene and isoprene are fed to the reaction system is made to differ depending on time of introduction to the reaction system.

In the first step, by performing at least one of the elements (i) to (vi), the randomness of the structural unit derived from butadiene and the structural unit derived from isoprene in the polymer block (B) is easily increased, and the characteristics of the hydrogenated product of the block copolymer in a low temperature region can be improved.

Specifically, as defined in the element (i), the average feed rate of butadiene and isoprene is not set to be too high, whereby the occurrence of a bias in the reaction of butadiene and isoprene is easily suppressed.

In addition, as defined in the element (ii), by appropriately increasing the polymerization temperature, it becomes easy to suppress excessive increase in the difference between the reaction rate of butadiene and the reaction rate of isoprene. As a result, the randomness of the structural unit derived from butadiene in the polymer block (B) is easily increased.

In addition, as defined in the element (iii), by using a small amount of the vinylating agent, the difference in the reaction rate between isoprene and butadiene is easily reduced, and the randomness of the structural unit derived from butadiene in the polymer block (B) is easily increased.

In this case, tetrahydrofuran is preferably used as the vinylating agent used in the element (iii) from the viewpoint of easily avoiding a rapid increase in the vinyl bonding amount in the resulting block copolymer due to the addition of the vinylating agent.

In addition, as defined in the element (iv), when the time for feeding butadiene and isoprene to the reaction system is set to 2.5 hours or more, the influence due to the difference in the reaction rate between both monomers is easily alleviated. As a result, the randomness of the structural unit derived from butadiene in the polymer block (B) is easily increased.

In addition, as defined in the element (v), when the amount of the polymerization initiator charged is represented by P (mol) and the amount of the unreacted conjugated diene monomer is represented by Q (mol), by carrying out the polymerization at Q/P of 100 or less, it is avoided that the amount of the unreacted monomer in the reaction system is excessively increased by the supply of the conjugated diene compound. Therefore, preferential reaction of butadiene is suppressed, and as a result, the randomness of the structural unit derived from butadiene in the polymer block (B) is easily increased.

Moreover, as defined in the element (vi), when butadiene and isoprene are fed to the reaction system, the mass ratio of the two is varied depending on the time of introduction into the reaction system, whereby the reaction of the component which tends to preferentially proceed can be delayed. Specifically, by setting the mass ratio of butadiene having a high reaction rate to be small in the initial stage of charging into the reaction system and to be large from the middle stage to the later stage, the influence of the reaction rate with isoprene is alleviated, and as a result, the randomness of the structural unit derived from butadiene in the polymer block (B) is easily increased.

Hereinafter, the first step and the second step will be described.

### (First Step)

In the first step, the block copolymer can be produced by, for example, a solution polymerization method, an emulsion polymerization method, or a solid phase polymerization method. Among these, a solution polymerization method is preferable, and for example, a known method such as an ion polymerization method such as anionic polymerization or cationic polymerization, or a radical polymerization method can be applied. Among them, an anionic polymerization method is preferable. In the anionic polymerization method, at least one selected from the group consisting of an aromatic vinyl compound and a conjugated diene compound is sequentially added in the presence of a solvent, an anionic polymerization initiator, and if necessary, a Lewis base to obtain a block copolymer, and if necessary, a coupling agent is added to cause a reaction.

Here, from the viewpoint of easily alleviating the influence due to the difference in the reaction rate between butadiene and isoprene, it is preferable to feed the conjugated diene monomer so that Q/P during the polymerization of the polymer block (B) is 100 or less, where P (mol) is the amount of the polymerization initiator charged and Q (mol) is the amount of the unreacted conjugated diene monomer, as defined in the element (v).

Examples of an organic lithium compound which can be used as the polymerization initiator for anionic polymerization include methyllithium, ethyllithium, n-butyllithium, sec-butyllithium, tert-butyllithium, and pentyllithium. Examples of a dilithium compound which can be used as the polymerization initiator include naphthalenedilithium and dilithiohexylbenzene.

Examples of the coupling agent include dichloromethane, dibromomethane, dichloroethane, dibromoethane, dibromobenzene, phenyl benzoate, methyldimethoxysilane, trimethoxysilane, tetramethoxysilane, methyltrimethoxysilane, isobutyltrimethoxysilane, and γ-glycidoxypropyltrimethoxysilane.

The amounts of the polymerization initiator and the coupling agent to be used are appropriately determined depending on the desired weight average molecular weight of the target block copolymer. In general, initiators such as alkyl lithium compounds and dilithium compounds are preferably used in a proportion of 0.01 to 0.2 parts by mass per 100 parts by mass of the total of monomers such as aromatic vinyl compounds and conjugated diene compounds used for polymerization. When the coupling agent is used, it is preferably used in a proportion of 0.001 to 0.8 parts by mass per 100 parts by mass of the total of the monomers.

The solvent is not particularly limited as long as it does not adversely affect the anionic polymerization reaction, and examples thereof include an aliphatic hydrocarbon such as cyclohexane, methylcyclohexane, n-hexane, and n-pentane; and an aromatic hydrocarbon such as benzene, toluene, and xylene.

Further, the polymerization reaction is carried out at a temperature of usually 0 to 100°C, and preferably 10 to 70°C, for usually 0.5 to 50 hours, and preferably 1 to 30 hours.

From the viewpoint of easily alleviating the influence due to the difference in the reaction rate between butadiene and isoprene, the polymerization temperature is preferably 55 to 80°C, more preferably 57 to 75°C, and still more preferably 58 to 72°C, as defined in the element (ii).

From the same viewpoint, as defined in the element (iv), the time for feeding butadiene and isoprene to the reaction system is set to 2.5 hours or more, more preferably 3 hours or more, still more preferably 4 hours or more, and even more preferably 5 hours or more.

In addition, by adding a Lewis base as a co-catalyst (vinylating agent) during polymerization, the content of 3,4-bond and 1,2-bond (vinyl bonding amount) in the polymer block (B) can be increased.

Examples of the Lewis base include ethers such as dimethyl ether, diethyl ether, tetrahydrofuran, and 2,2-di(2-tetrahydrofuryl)propane (DTHFP); glycol ethers such as ethylene glycol dimethyl ether, diethylene glycol dimethyl ether, triethylene glycol dimethyl ether, and tetraethylene glycol dimethyl ether; amines such as triethylamine, N,N,N',N'-tetramethylenediamine, N,N,N',N'-tetramethylethylenediamine (TMEDA), and N-methylmorpholine; and metal salts such as sodium or potassium salts of aliphatic alcohols such as sodium t-butylate, sodium t-amylate, and sodium isopentylate, or sodium or potassium salts of alicyclic alcohols such as dialkylsodium cyclohexanolate, for example, sodium mentholate.

Among the above-mentioned Lewis bases, tetrahydrofuran and DTHFP are preferably used from the viewpoint of impact resistance and thermal stability, and tetrahydrofuran is more preferably used from the viewpoint of easily alleviating the influence due to the difference in the reaction rate between butadiene and isoprene.

These Lewis bases may be used alone or in combination of two or more thereof.

The addition amount of the Lewis base is determined depending on to what extent the vinyl bonding amount of the structural unit derived from butadiene and the structural unit derived from isoprene constituting the polymer block (B) is controlled. Therefore, the addition amount of the Lewis base is not limited in a strict sense, but it is preferably used in the range of usually 0.1 to 1,000 mol, and preferably 1 to 100 mol, per 1 mol of lithium contained in the alkyllithium compound or the dilithium compound used as the polymerization initiator.

When a vinylating agent is used for the purpose of alleviating the influence due to the difference in the reaction rate between butadiene and isoprene, the amount of the vinylating agent used is preferably 0.3% by mass or less, more preferably 0.25% by mass or less, still more preferably 0.2% by mass or less, even more preferably 0.15% by mass or less, particularly preferably 0.1% by mass or less, and most preferably 0.05% by mass or less, with respect to the total mass of the raw material compounds, as defined in the element (c). The lower limit of the amount of the vinylating agent used may be, for example, 0.01% by mass or more, or 0.02% by mass or more.

It is of course also possible to carry out the above-mentioned polymerization reaction without addition of a Lewis base. In particular, from the viewpoint of easily lowering the glass transition temperature of the hydrogenated product of the block copolymer, it is preferable not to add a Lewis base in the first step.

Butadiene and isoprene may always be supplied to the reaction system at the same mass ratio, or the mass ratio may be varied depending on the time of supply as defined in the element (vi). In the former case, control in the production of the block copolymer is easy, and in the latter case, the difference in the reaction rate of the monomers is easily adjusted.

In the polymerization of the polymer block (B) in the first step, the average feed rate of the conjugated diene compound (hereinafter, sometimes referred to as "average diene feed rate") is preferably 50 kg/h/mol or less, more preferably 30 kg/h/mol or less, still more preferably 20 kg/h/mol or less, and even more preferably 15 kg/h/mol or less, per 1 mol of an active terminal, from the viewpoint of ensuring the randomness of the structural unit derived from butadiene and the structural unit derived from isoprene in the polymer block (B), as defined in the element (i). The lower limit of the average diene feed rate is not particularly limited, but is, for example, 0.1 kg/h/mol per 1 mol of an active terminal from the viewpoint of productivity. In other words, in the polymerization of the polymer block (B) in the first step, the average feed rate of the conjugated diene compound is preferably 0.1 to 50 kg/h/mol.

In the description herein, the "average diene feed rate" means a numerical value obtained by dividing the mass of the entire conjugated diene compound by the time required for feeding the entire conjugated diene compound (diene feed time) and the number of moles of an active terminal, and the unit thereof is represented by "kg/h/mol". The number of moles of an active terminal is a numerical value obtained by dividing the amount (g) of the monomer used for the polymerization of the polymer block (A) by the weight average molecular weight of the polymer block (A).

In the first step, after the polymerization, an active hydrogen compound such as an alcohol, a carboxylic acid, or water is added to terminate the polymerization reaction.

### (Second Step)

In the second step, for example, a hydrogenation reaction is performed in an inert organic solvent in the presence of a hydrogenation catalyst to obtain a hydrogenated copolymer.

The hydrogenation reaction can be carried out at a hydrogen pressure of usually 0.1 to 20 MPa, preferably 0.5 to 15 MPa, and more preferably 0.5 to 5 MPa, a reaction temperature of usually 20 to 250°C, preferably 50 to 180°C, and more preferably 70 to 180°C, and a reaction time of usually 0.1 to 100 hours, and preferably 1 to 50 hours.

From the viewpoint of performing the hydrogenation reaction of the polymer block (B) while suppressing the nuclear hydrogenation of the aromatic vinyl compound, examples of the hydrogenation catalyst include Raney-nickel; Ziegler-based catalysts comprising a combination of a transition-metal compound and an alkylaluminum compound, an alkyl lithium compound, or the like; and metallocene-based catalysts. From the same viewpoint as described above, among these, a Ziegler-based catalyst is preferable, a Ziegler-based catalyst formed of a combination of a transition metal compound and an alkylaluminum compound is more preferable, and a Ziegler-based catalyst formed of a combination of a nickel compound and an alkylaluminum compound (Al/Ni-based Ziegler catalyst) is still more preferable.

The hydrogenated block copolymer thus obtained can be obtained by pouring the polymerization reaction solution into methanol or the like, followed by stirring, filtration, and heating or drying under reduced pressure, or by pouring the polymerization reaction solution into hot water together with steam, followed by so-called steam stripping in which the solvent is removed by azeotropic distillation, and then heating or drying under reduced pressure.

### [Method for Producing Resin Composition]

The method for producing the resin composition is not particularly limited, and a known method can be employed. For example, the resin composition can be produced by mixing the hydrogenated product of the block copolymer as the component (a) and the oil component as the component (b) using a mixer such as a Henschel mixer, a V blender, a ribbon blender, a tumbler blender, or a conical blender, or by melt-kneading the mixture after the mixing using a single-screw extruder, a twin-screw extruder, a kneader, or the like.

Even in a case where the resin composition contains the above-described additives in addition to the components (a) to (d), the resin composition can be produced by mixing the above-described additives in addition to the component (a) and the component (b) by the above-described mixer or by melt-kneading the above-described additives in the above-described apparatus after the mixing. In addition, a resin composition containing the component (a), the component (b), and optionally the component (d) in addition thereto can also be produced in the same manner.

### [Method for Producing Gel Composition]

The gel composition according to the embodiment of the present invention can be produced using a production method known in the art. For example, the gel composition can be produced by mixing the hydrogenated block copolymer as the component (α), the base oil (β), and if necessary, other components. The mixing can be performed using a well-known mixing apparatus.

To be more specific, the gel composition can be produced by mixing the hydrogenated block copolymer, the base oil (β), and if necessary, other components at 100 to 200°C for 0.1 to 10 hours under air or nitrogen, and if necessary, under vacuum, followed by cooling.

### Examples

The present invention will be described in more detail below by way of Examples, but the present invention is not limited to these Examples at all.

### [Example 1]

### <Production of Hydrogenated Product TPE-1 of Block Copolymer>

A nitrogen-purged and dried pressure-resistant vessel was charged with 50 kg of cyclohexane (solvent) dried with a molecular sieve A4 and 0.137 kg of a cyclohexane solution of sec-butyllithium having a concentration of 10.5% by mass as an anionic polymerization initiator (substantial addition amount of sec-butyllithium: 14.4 g).

After the temperature inside the pressure-resistant vessel was raised to 70°C, 1.1 kg of styrene (1) was added thereto and the mixture was polymerized for 30 minutes, 0.012 kg of tetrahydrofuran as a Lewis base was added thereto, 4.5 kg of butadiene and 5.7 kg of isoprene were added thereto over 5 hours (that is, the diene feed time was 5 hours and the average diene feed rate was 9 kg/h/mol), and the mixture was polymerized for 1 hour. Thereafter, 1.1 kg of styrene (2) was added thereto, the mixture was polymerized for 30 minutes, and methanol was added thereto to stop the reaction, thereby obtaining a reaction solution containing a triblock copolymer of polystyrene-polybutadiene/polyisoprene-polystyrene.

A Ziegler-based hydrogenation catalyst formed from nickel octylate and trimethylaluminum was added to the reaction solution under a hydrogen atmosphere, and the mixture was reacted for 5 hours under the conditions of a hydrogen pressure of 1 MPa and 80°C. The reaction solution was allowed to cool and depressurized, and then washed with water to remove the catalyst, followed by vacuum drying to obtain a hydrogenated product (TPE-1) of a triblock copolymer of polystyrene-polybutadiene/polyisoprene-polystyrene.

### [Examples 2 to 6]

### <Production of Hydrogenated Products TPE-2 to TPE-6 of Block Copolymers>

Hydrogenated products of triblock copolymers of polystyrene-polybutadiene/polyisoprene-polystyrene (hydrogenated block copolymers TPE-2 to TPE-6) were produced in the same manner as in Example 1, except that the raw materials and the amounts thereof used were as shown in Table 1. In the case of TPE-6, the polymerization temperature was set to 60°C, the diene feed time was set to 3 hours, and the average diene feed rate was set to 41 kg/h/mol. In the case of TPE-3, tetrahydrofuran was not added when the conjugated diene compound was fed.

### [Examples X7 and X8]

### <Production of Hydrogenated Products TPE-7 and TPE-8 of Block Copolymers>

Hydrogenated products of diblock copolymers of polystyrene-polybutadiene/polyisoprene (hydrogenated block copolymers TPE-7 and TPE-8) were produced in the same manner as in Example 1, except that the raw materials and the amounts thereof used were as shown in Table 1, the polymerization temperature was set to 60°C (Example X7) or 50°C (Example X8), and styrene (2) was not added. The average diene feed rates of Examples X7 and X8 were 14 kg/h/mol and 13 kg/h/mol, respectively.

### [Comparative Examples 1 to 4]

### <Production of Hydrogenated Products TPE-1' to TPE-4' of Block Copolymers>

Hydrogenated block copolymers TPE-1' to TPE-4' were produced in the same manner as in Example 1, except that the raw materials and the amounts thereof used were as shown in Table 1, the diene feed time was set to 2 hours, and the polymerization temperature was set to 50°C.

The average diene feed rates of Comparative Examples 1 to 4 were 24 kg/h/mol, 19 kg/h/mol, 62 kg/h/mol, and 20 kg/h/mol, respectively. In addition, in Comparative Examples 1 to 3, tetrahydrofuran was not added when the conjugated diene compound was fed. In Comparative Example 4, only butadiene was used as the conjugated diene compound.

### [Comparative Examples X5 to X7]

### <Production of Hydrogenated Products TPE-5' to TPE-7' of Block Copolymers>

Hydrogenated block copolymers TPE-5' to TPE-7' were produced in the same manner as in Example 1, except that the raw materials and the amounts thereof used were as shown in Table 1, the polymerization temperature was set to 50°C (Comparative Examples X5 and X6) or 60°C (Comparative Example X7), and styrene (2) was not added.

The average diene feed rates of Comparative Examples X5 to X7 were 13 kg/h/mol, 13 kg/h/mol, and 14 kg/h/mol, respectively. In addition, in Comparative Examples X5 to X7, tetrahydrofuran was not added when the conjugated diene compound was fed. In Comparative Example X5, only isoprene was used as the conjugated diene compound.

**Table 1**

| | | | Examples | | | | | | | |
|---|---|---|---|---|---|---|---|---|---|---|
| | | | 1 | 2 | 3 | 4 | 5 | 6 | X7 | X8 |
| Hydrogenated product of block copolymer | | | TPE-1 | TPE-2 | TPE-3 | TPE-4 | TPE-5 | TPE-6 | TPE-7 | TPE-8 |
| Amou nt used (kg) | Cyclohexane | | 50 | 50 | 50 | 50 | 50 | 50 | 50 | 50 |
| | sec-Butyllithium (10.5% by mass cyclohexane solution) | | 0.137 | 0.137 | 0.122 | 0.139 | 0.157 | 0.022 | 0.086 | 0.072 |
| | (A) | Styrene (1) | 1.1 | 1.1 | 1.6 | 1.9 | 2.1 | 0.9 | 2.3 | 4.7 |
| | | Styrene (2) | 1.1 | 1.1 | 1.6 | 1.9 | 2.1 | 0.9 | - | - |
| | (B) | Butadiene | 4.5 | 4.5 | 3.4 | 3.9 | 4.4 | 1.9 | 5.7 | 3.4 |
| | | Isoprene | 5.7 | 5.7 | 4.3 | 4.9 | 5.5 | 2.4 | 4.5 | 4.3 |
| | Lewis base | Tetrahydrofuran | 0.012 | 0.024 | - | 0.006 | 0.015 | 0.006 | 0.006 | 0.006 |
| Diene feed time (h) | | | 5 | 5 | 5 | 5 | 5 | 3 | 5 | 5 |
| Polymerization temperature (°C) | | | 70 | 70 | 70 | 70 | 70 | 60 | 60 | 50 |
| Average diene feed rate (kg/h/mol) | | | 9 | 9 | 8 | 8 | 8 | 41 | 14 | 13 |

**Table 1 (continued)**

| | | | Comparative Example | | | | | | |
|---|---|---|---|---|---|---|---|---|---|
| | | | 1 | 2 | 3 | 4 | X5 | X6 | X7 |
| Hydrogenated product of block copolymer | | | TPE-1' | TPE-2' | TPE-3' | TPE-4' | TPE-5' | TPE-6' | TPE-7' |
| Amoun t used (kg) | Cyclohexane | | 50 | 50 | 50 | 50 | 50 | 50 | 50 |
| | sec-Butyllithium (10.5% by mass cyclohexane solution) | | 0.123 | 0.166 | 0.024 | 0.13 | 0.072 | 0.072 | 0.086 |
| | (A) | Styrene (1) | 1.3 | 2.2 | 1.0 | 2.0 | 4.7 | 4.7 | 2.3 |
| | | Styrene (2) | 1.3 | 2.2 | 1.0 | 2.0 | - | - | - |
| | (B) | Butadiene | 4.4 | 4.6 | 2.1 | 8.5 | - | 3.4 | 5.7 |
| | | Isoprene | 5.6 | 5.8 | 2.7 | - | 7.7 | 4.3 | 4.5 |
| | Lewis base | Tetrahydrofuran | - | - | - | 0.108 | - | - | - |
| Diene feed time (h) | | | 2 | 2 | 2 | 2 | 5 | 5 | 5 |
| Polymerization temperature (°C) | | | 50 | 50 | 50 | 50 | 50 | 50 | 60 |
| Average diene feed rate (kg/h/mol) | | | 24 | 19 | 62 | 20 | 13 | 13 | 14 |

### <Physical Properties of Hydrogenated Block Copolymers>

Each physical property of the hydrogenated block copolymers TPE-1 to TPE-8 and TPE-1' to TPE-7' was measured according to the following measurement methods. The results are shown in Table 2 together with the composition of each hydrogenated block copolymer. In Table 2, "-" indicates that the measurement could not be performed because the hydrogenated block copolymer could not be molded. In addition, since a crystallization peak of the hydrogenated block copolymer TPE-5' of Comparative Example X5 could not be detected, the following "crystallization temperature" and "quantity of heat of crystallization" could not be measured, and therefore "-*" is shown in the corresponding part of Table 2 and in the column of "5.8×/100000 - y". In addition, since the polymer block (B) of the hydrogenated block copolymer TPE-5' does not have a structural unit derived from butadiene and the following "1,4-Bd chain ratio" cannot be measured, "-**" is shown in the corresponding part of Table 2.

### (Contents of Polymer Block (A) and Polymer Block (B))

The hydrogenated block copolymer was dissolved in CDCl₃, ¹H-NMR measurement was performed [apparatus: "AVANCE 400 Nanobay" (manufactured by Bruker Corporation), measurement temperature: 30°C], the content of the polymer block (A) was calculated from the peak intensity derived from styrene, and the content of the polymer block (A) was subtracted from 100% by mass to calculate the content of the polymer block (B).

### (Vinyl Bonding Amount of Polymer Block (B))

The block copolymer before hydrogenation was dissolved in CDCl₃ and ¹H-NMR measurement [apparatus: "AVANCE 400 Nanobay" (manufactured by Bruker Corporation), measurement temperature: 30°C] was performed. Then, the vinyl bonding amount was calculated from the ratio of the peak areas corresponding to the 3,4-bond unit and the 1,2-bond unit in the isoprene structure unit and the 1,2-bond unit in the butadiene structure unit to the total peak area of the structural units derived from butadiene and isoprene.

### (Hydrogenation Rate of Polymer Block (B))

The hydrogenated block copolymer was dissolved in CDCl₃, and ¹H-NMR measurement [apparatus: "AVANCE 400 Nanobay" (manufactured by Bruker Corporation), measurement temperature: 30°C] was performed to calculate the hydrogenation rate from the ratio of the peak area derived from the remaining olefin of butadiene or isoprene to the peak area derived from hydrogenated butadiene and hydrogenated isoprene.

### (Weight Average Molecular Weight (Mw))

The weight average molecular weight (Mw) in terms of polystyrene of the hydrogenated block copolymer was determined by gel permeation chromatography (GPC) under the following conditions. In addition, the Mw of the polymer block (A) was determined from the peak derived from the first polymer block (A) deactivated by the same measurement.

### <<GPC Measurement Apparatus and Measurement Conditions>>

· Apparatus: GPC apparatus "HLC-8020" manufactured by Tosoh Corporation
. Separation column: Two "TSKgel G4000HX" columns manufactured by Tosoh Corporation were connected in series.
· Eluent: Tetrahydrofuran
· Eluent flow rate: 0.7 mL/min
· Sample concentration: 5 mg/10 mL
· Column temperature: 40°C
· Detector: Differential refractive index (RI) detector
· Calibration curve: prepared using standard polystyrene

### (Tan δ and Shear Storage Modulus G' at -40°C of Hydrogenated Block Copolymer)

For the following measurement, the hydrogenated block copolymers obtained in Examples and Comparative Examples were pressurized at a temperature of 230°C and a pressure of 10 MPa for 3 minutes to prepare a single layer sheet having a thickness of 1.0 mm. The single layer sheet was cut into a disk shape, and this was used as a test sheet.

For the measurement, based on JIS K 7244-10 (2005), a strain control-type dynamic viscoelasticity apparatus "ARES-G2" (manufactured by TA Instruments, Inc.) having a disk diameter of 8 mm was used as a parallel-plate oscillation rheometer.

The gap between the two flat plates was completely filled with the test sheet, vibration was applied to the sample in a shear mode at a frequency of 1 Hz with a strain amount of 1%, the temperature was raised from -80°C to 0°C at a constant speed of 3°C/min, and the maximum value (peak top intensity) of the peak intensity of tan δ of the hydrogenated block copolymer, the temperature at which the maximum value was obtained (peak top temperature), and the shear storage modulus G' at -40°C of the hydrogenated block copolymer at a measurement temperature of -80°C to 0°C were obtained.

### (Glass Transition Temperature (Tg))

The Tg of the hydrogenated block copolymer was measured by raising the temperature from -100°C to +350°C at a rate of 10°C/min using DSC250 manufactured by TA Instruments, Inc., and a shift position of the baseline of the DSC curve (specifically, an intersection point between a line of a middle point of the baseline before and after the specific heat change appeared and the DSC curve) was defined as Tg.

### (Crystallization Temperature and Quantity of Heat of Crystallization)

The crystallization temperature and the quantity of heat of crystallization of the hydrogenated block copolymer were determined in accordance with JIS K 7121 (2012) and JIS K 7122 (2012) by using DSC250 manufactured by TA Instruments, Inc., the temperature was changed in the following order of heating step 1, cooling step, and heating step 2, and the crystallization temperature was determined from the peak temperature of a DSC curve obtained in the cooling step and the quantity of heat of crystallization was determined from the peak area thereof. The peak area was calculated by using, as a baseline, a straight line passing through two points of a peak temperature of +80°C and a peak temperature of +50°C in the DSC curve.
· Heating step 1: heating from 40°C to 180°C at a heating rate of 10°C/min
· Cooling step: cooling from +180°C to -100°C at a cooling rate of 10°C/min
· Heating step 2: heating from -100°C to +180°C at a heating rate of 10°C/min

### (5.8x/100,000 - y)

The value of "5.8x/100,000 - y" was calculated, where x is the weight average molecular weight of the hydrogenated product of the block copolymer, and y (°C) is the crystallization temperature of the hydrogenated product of the block copolymer, which were measured by the above procedure.

### (Chain Ratio of 1,4-Bond of Hydrogenated Butadiene)

Inverse gate decoupling ¹³C-NMR measurement was performed on the hydrogenated product of the block copolymer obtained in each of Examples and Comparative Examples, and a proportion of a peak appearing at 29.2 ppm among peaks derived from 1,4-bond of hydrogenated butadiene obtained by the measurement was calculated and set as a chain ratio of 1,4-bond of hydrogenated butadiene (1,4-Bd chain ratio).

### (Tensile Strength and Tensile Elongation at Break)

The hydrogenated product of the block copolymer obtained in each of Examples and Comparative Examples was pressurized at a temperature of 230°C and a pressure of 10 MPa for 3 minutes to prepare a single layer sheet having a thickness of 1.0 mm. This sheet was punched into the shape of a JIS No. 3 dumbbell test piece, and the tensile strength and the tensile elongation at break were measured in accordance with JIS K 6251 (2017). The higher the numerical values of the tensile strength and the tensile elongation at break, the more excellent the tensile properties.

**Table 2**

| | Examples | | | | | | | |
|---|---|---|---|---|---|---|---|---|
| | 1 | 2 | 3 | 4 | 5 | 6 | X7 | X8 |
| Hydrogenated product of block copolymer used | TPE-1 | TPE-2 | TPE-3 | TPE-4 | TPE-5 | TPE-6 | TPE-7 | TPE-8 |
| Structural unit of polymer block (A) | St | St | St | St | St | St | St | St |
| Component constituting polymer block (B) | Bd/Ip | Bd/Ip | Bd/Ip | Bd/Ip | Bd/Ip | Bd/Ip | Bd/Ip | Bd/Ip |
| Mass ratio of components constituting polymer block (B) | 45/55 | 45/55 | 45/55 | 45/55 | 45/55 | 45/55 | 45/55 | 45/55 |
| Molar ratio of components constituting polymer block (B) | 50/50 | 50/50 | 50/50 | 50/50 | 50/50 | 50/50 | 50/50 | 50/50 |
| Polymer structure | A/B/A | A/B/A | A/B/A | A/B/A | A/B/A | A/B/A | A/B | A/B |
| Content of polymer block (A) (% by mass) | 18 | 18 | 30 | 30 | 30 | 30 | 18 | 38 |
| Weight average molecular weight of polymer block (A) | 5000 | 5000 | 8200 | 8200 | 8200 | 25,500 | 16,000 | 40,000 |
| Content of polymer block (B) (% by mass) | 82 | 82 | 70 | 70 | 70 | 70 | 82 | 62 |
| Weight average molecular weight of hydrogenated product of block copolymer | 100,00 0 | 100,00 0 | 98,100 | 93,100 | 97,300 | 288,00 0 | 150,00 0 | 150,00 0 |
| Hydrogenation rate of polymer block (B) (mol%) | 99 | 99 | 99 | 99 | 99 | 99 | 99 | 99 |
| Vinyl bonding amount of polymer block (B) (mol%) | 14 | 19 | 8 | 11 | 16 | 12 | 12 | 12 |
| Glass transition temperature (°C) | -60 | -60 | -55 | -56 | -60 | -57 | -59 | -60 |
| Crystallization temperature (°C) | -26 | -38 | -14 | -20 | -36 | -14 | -15 | -10 |
| Quantity of heat of crystallization (J/g) | 8.6 | 4.9 | 13.3 | 12.7 | 5.4 | 11.5 | 13.1 | 12.6 |
| 5.8x/100000-y | 32 | 44 | 20 | 25 | 42 | 31 | 24 | 19 |
| 1,4-Bd chain ratio (%) | 46 | 38 | 48 | 45 | 34 | 55 | 44 | 47 |
| Peak top temperature of tan δ (°C) | -52 | -53 | -50 | -51 | -53 | - | -52 | -52 |
| Peak top intensity of tan δ | 0.96 | 1.3 | 0.51 | 0.68 | 0.83 | - | 0.92 | 0.53 |
| G' at -40°C and 1 Hz (MPa) | 3.6 | 2.4 | 15 | 8.6 | 7.6 | - | 4.5 | 23 |
| Tensile strength (MPa) | 31 | 24 | 47 | 49 | 45 | - | 1 | 3.5 |
| Tensile elongation at break (%) | 550 | 580 | 510 | 510 | 550 | - | 140 | 30 |

**Table 2 (continued)**

| | Comparative Example | | | | | | |
|---|---|---|---|---|---|---|---|
| | 1 | 2 | 3 | 4 | X5 | X6 | X7 |
| Hydrogenated product of block copolymer used | TPE-1' | TPE-2' | TPE-3' | TPE-4' | TPE-5' | TPE-6' | TPE-7' |
| Structural unit of polymer block (A) | St | St | St | St | St | St | St |
| Component constituting polymer block (B) | Bd/Ip | Bd/Ip | Bd/Ip | Bd | Ip | Bd/Ip | Bd/Ip |
| Mass ratio of components constituting polymer block (B) | 45/55 | 45/55 | 45/55 | 100 | 100 | 45/55 | 45/55 |
| Molar ratio of components constituting polymer block (B) | 50/50 | 50/50 | 50/50 | 100 | 100 | 50/50 | 50/50 |
| Polymer structure | A/B/A | A/B/A | A/B/A | A/B/A | A/B | A/B | A/B |
| Content of polymer block (A) (% by mass) | 20 | 30 | 30 | 32 | 38 | 38 | 18 |
| Weight average molecular weight of polymer block (A) | 6,200 | 8,200 | 25,700 | 9,400 | 40,000 | 40,000 | 16,000 |
| Content of polymer block (B) (% by mass) | 80 | 70 | 70 | 68 | 62 | 62 | 82 |
| Weight average molecular weight of hydrogenated product of block copolymer | 100,000 | 92,000 | 290,000 | 100,000 | 150,000 | 150,000 | 150,000 |
| Hydrogenation rate of polymer block (B) (mol%) | 99 | 99 | 99 | 99 | 99 | 99 | 99 |
| Vinyl bonding amount of polymer block (B) (mol%) | 7 | 7 | 7 | 40 | 7 | 7 | 7 |
| Glass transition temperature (°C) | -54 | -54 | -54 | -55 | -59 | -57 | -57 |
| Crystallization temperature (°C) | -7 | -6 | 6 | -2 | -* | 16 | 20 |
| Quantity of heat of crystallization (J/g) | 18.5 | 17.4 | 23.2 | 18.0 | -* | 12.2 | 15.0 |
| 5.8x/100000-y | 13 | 11 | 11 | 8 | -* | -7 | -11 |
| 1,4-Bd chain ratio (%) | 56 | 50 | 62 | 51 | -** | 55 | 55 |
| Peak top temperature of tan δ (°C) | -49 | -50 | - | -47 | -52 | -50 | -50 |
| Peak top intensity of tan δ | 0.54 | 0.39 | - | 0.35 | 0.65 | 0.43 | 0.75 |
| G' at -40°C and 1 Hz (MPa) | 11 | 30 | - | 34 | 25 | 30 | 7.3 |
| Tensile strength (MPa) | 26 | 47 | - | 37 | 1.5 | 3 | 1 |
| Tensile elongation at break (%) | 460 | 490 | - | 550 | 70 | 20 | 100 |

As shown in Table 2, in the hydrogenated block copolymers of Examples 1 to 6 and Examples X7 and X8, the structural unit derived from the conjugated diene compound of the polymer block (B) has a structural unit derived from butadiene and a structural unit derived from isoprene, and does not have a structural unit derived from farnesene. In addition, the glass transition temperature of the hydrogenated product of the block copolymer is -50°C or lower. In addition, the weight average molecular weight x of the hydrogenated product of the block copolymer and the crystallization temperature y (°C) of the hydrogenated product of the block copolymer satisfy the relationship of 5.8x/100,000 - y > 17. That is, the hydrogenated block copolymers of Examples 1 to 6 and Examples X7 and X8 satisfy the above-described conditions (1) to (3), and it is found that the hydrogenated block copolymers of Examples 1 to 6 have a low crystallization temperature and a low quantity of heat of crystallization, and have good flexibility and rubber elasticity in a low temperature region.

In addition, the hydrogenated block copolymers of Examples 1 to 5 also satisfying the relationships of the conditions (I) to (III) generally have a low value of the shear storage modulus G' at -40°C and 1 Hz, and are found to exhibit excellent rubber elasticity and flexibility in a low temperature region.

The hydrogenated block copolymers of Examples X7 and X8 have a diblock polymer structure, and the values of tensile strength and tensile elongation at break are lower than those of the hydrogenated block copolymers of Examples 1 to 6. However, when compared with Comparative Example X7 and Comparative Example X6 which have a diblock polymer structure but do not satisfy the condition (3), it is found that the values of tensile elongation at break are large, the values of tensile strength are equal to or higher than those of Comparative Examples X7 and X6, and the values of shear storage modulus G' at -40°C and 1 Hz are low.

On the other hand, it is found that the hydrogenated products of the block copolymers of Comparative Examples 1 and 2 satisfying the conditions (1) and (2) but not satisfying the condition (3) and the hydrogenated products of the block copolymers of Comparative Examples 1 and 2 satisfying the conditions (I) and (II) but not satisfying the condition (III) have smaller tensile elongation at break than the hydrogenated block copolymers of Examples 1 to 5.

In addition, the hydrogenated product of the block copolymer of Comparative Example 1 has a large value of the shear storage modulus G' at -40°C and 1 Hz as compared with the hydrogenated products of the block copolymers of Examples 1 and 2 in which the content of the polymer block (A) is substantially the same. That is, it is found that the hydrogenated product of the block copolymer of Comparative Example 1 is inferior to the hydrogenated products of the block copolymers of Examples 1 and 2 in rubber elasticity and flexibility in a low temperature region.

In addition, the hydrogenated products of the block copolymers of Comparative Examples 2 and 4 have a lower peak top intensity of tan δ and a larger value of the shear storage modulus G' at -40°C and 1 Hz than the hydrogenated products of the block copolymers of Examples 3 to 5 in which the content of the polymer block (A) is substantially the same. That is, it can be seen that the hydrogenated products of the block copolymers of Comparative Examples 2 and 4 are inferior to the hydrogenated products of the block copolymers of

### Examples 3 to 5 in rubber elasticity and flexibility in a low temperature region.

The hydrogenated product of the block copolymer of Example 6 satisfying the conditions (1) to (3) and the conditions (I) and (II) but not satisfying the condition (III), and the hydrogenated product of the block copolymer of Comparative Example 3 satisfying the conditions (1) and (2) but not satisfying the condition (3), and also satisfying the conditions (I) and (II) but not satisfying the condition (III), could not be molded because of poor moldability. Therefore, the peak top temperature of tan δ, the peak top intensity of tan δ, the shear storage modulus G' at -40°C and 1 Hz, the tensile strength, and the tensile elongation at break could not be measured.

However, as is clear from the comparison between the hydrogenated product of the block copolymer of Example 6 and the hydrogenated product of the block copolymer of Comparative Example 3, it is found that the former has a lower crystallization temperature and a lower quantity of heat of crystallization than the latter, and has better flexibility and rubber elasticity in a low-temperature region. In addition, as shown in Table 3, it is found that the former has higher tensile strength when the hydrogenated products of these block copolymers are each added to an oil component to obtain resin compositions.

### [Example 7 and Comparative Example 5]

According to the mix proportion shown in Table 3, the hydrogenated products of the block copolymers obtained in the above Example and Comparative Example and an oil were prepared. These materials were left at 110°C for 90 minutes, and then kneaded in Labo Plastomill 10S100 (manufactured by Toyo Seiki Seisaku-sho, Ltd.) at 110°C and 70 rpm for 5 minutes to obtain resin compositions.

### <Oil-1>

· Diana Process Oil PW-32 (paraffin-based oil, manufactured by Idemitsu Kosan Co.,Ltd.)

### (Tensile Strength)

The obtained resin compositions were each pressed at a temperature of 160°C and a pressure of 2 MPa for 2 minutes to prepare a single layer sheet having a thickness of 2.0 mm. This sheet was punched into the shape of a JIS No. 3 dumbbell test piece, and the tensile strength was measured under the conditions of a chuck-to-chuck distance of 10 mm, a chuck pressure of 0.25 MPa, and a tensile speed of 500 mm/min in accordance with JIS K 6251 (2017). The results are shown in Table 3.

### (Oil Retention Rate)

The obtained resin compositions were each pressed at a temperature of 160°C and a pressure of 2 MPa for 2 minutes to prepare a single layer sheet having a thickness of 2.0 mm. This sheet was punched out into a diameter of 40 mmφ, and both sides were sandwiched with filter paper (ADVANTEC No. 5C, φ70 mm, manufactured by Advantec Toyo Kaisha, Ltd.), and further sandwiched with glass plates on both sides to obtain a sample. This sample was placed in an environment of 23°C and -30°C, and the filter paper was replaced with a new one every 7 days for 28 days. The oil retention rate ((M1/M0) × 100) was calculated from the weight M0 of the sheet of the resin composition before the test and the weight M1 of the sheet of the resin composition after 28 days. The results are shown in Table 3.

**Table 3**

| | | Example 7 | Comparativ e Example 5 |
|---|---|---|---|
| Resin composition [parts by mass] | TPE-6 | 11 | - |
| | TPE-3' | - | 11 |
| | Oil-1 | 89 | 89 |
| Tensile strength (MPa) | | 0.47 | 0.45 |
| Oil retention rate at 23°C | | 74 | 72 |
| Oil retention rate at -30°C | | 87 | 82 |

As shown in Table 3, the resin composition of Example 7 exhibits a higher tensile strength than the resin composition of Comparative Example 5, and has a higher oil retention rate at 23°C and -30°C than the resin composition of Comparative Example 5. That is, it is found that the resin composition using the hydrogenated product (TPE-6) of the block copolymer satisfying the above-described conditions (1) to (3) exhibits excellent mechanical properties and excellent oil retainability at room temperature and low temperature as compared with the resin composition using the hydrogenated product (TPE-3') of the block copolymer satisfying the conditions (1) and (2) but not satisfying the condition (3).

### [Examples 8 and 9 and Comparative Example 6]

According to the mix proportion shown in Table 4, the hydrogenated products of the block copolymers obtained in the above Example and Comparative Example and the following resins were prepared. These materials were kneaded in Labo Plastomill 10S100 (manufactured by Toyo Seiki Seisaku-sho, Ltd.) at 200°C and 70 rpm for 3 minutes to obtain a resin composition.

### <PP-1>

· Prime Polypro J107G (homopolypropylene, manufactured by Prime Polymer Co., Ltd.)

### <POE-1>

· ENGAGE 8200 (polyolefin elastomer, manufactured by The Dow Chemical Company)

### <HDPE-1>

. SHE150 (high-density polyethylene, manufactured by Braskem S.A.)

### (Tensile Properties)

Each of the obtained resin compositions was injection-molded into an ISO527-2-1BA dumbbell test piece by a desktop injection molding machine ("Mini-Jet Pro", manufactured by Thermo Fisher Scientific K.K.) to obtain a test piece. After the test piece was stored at 23°C for 16 hours, the tensile modulus (23°C), the yield point stress (23°C), and the tensile elongation at break (23°C) were measured by using an autograph manufactured by Shimadzu Corporation in accordance with JIS K 7161 (2014). In addition, after the test piece was stored at -20°C for 16 hours, the yield point stress (-20°C) and the tensile elongation at break (-20°C) were measured by performing the same measurement. The results are shown in Table 4.

### (Charpy Impact Strength)

Each of the obtained resin compositions was injection-molded into a 10 mm long × 80 mm wide × 4 mm thick test piece using a desktop injection molding machine ("Mini-Jet Pro" manufactured by Thermo Fisher Scientific K.K.), and notched in accordance with JIS K 7111-1 (2012) to obtain a test piece. The test piece was stored at 23°C for 16 hours, and then the Charpy impact strength (23°C) was measured with an impact strength measuring instrument. The results are shown in Table 4.

**Table 4**

| | | Example 8 | Example 9 | Comparative Example 6 |
|---|---|---|---|---|
| Resin composition [parts by mass] | PP-1 | 60 | 60 | 60 |
| | TPE-1 | 10 | - | - |
| | TPE-2 | - | 10 | - |
| | TPE-1' | - | - | 10 |
| | POE-1 | 10 | 10 | 10 |
| | HDPE-1 | 20 | 20 | 20 |
| Tensile modulus [23°C] (MPa) | | 800 | 780 | 760 |
| Yield point stress [23°C] (MPa) | | 26.6 | 26.2 | 26.5 |
| Tensile elongation at break [23°C] (%) | | 530 | 480 | 390 |
| Yield point stress [-20°C] (MPa) | | 42.4 | 35.3 | 40.3 |
| Tensile elongation at break [-20°C] (%) | | 250 | 100 | 100 |
| Charpy impact strength [23°C] (kJ/m²) | | 25 | 28 | 13 |

As shown in Table 4, the resin compositions of Examples 8 and 9 show a higher tensile elongation at break (23°C) than the resin composition of Comparative Example 6. In addition, the resin composition of Example 8 shows a higher tensile elongation at break (-20°C) than the resin composition of Comparative Example 6. Furthermore, the resin compositions of Examples 8 and 9 show a higher impact strength than the resin composition of Comparative Example 6. That is, it is found that the resin compositions using the hydrogenated products (TPE-1 and TPE-2) of the block copolymers satisfying the conditions (1) to (3) and the conditions (I) to (III) have improved tensile elongation at break and impact strength as compared with the resin composition using the hydrogenated product (TPE-1') of the block copolymer satisfying the conditions (1) and (2) but not satisfying the condition (3) and satisfying the conditions (I) and (II) but not satisfying the condition (III).

### [Examples 10 and 11 and Comparative Examples 7 and 8]

According to the mix proportion shown in Table 5, the hydrogenated product of the block copolymer obtained in each of Examples and Comparative Examples and the above-described HDPE-1 were kneaded in Labo Plastomill 10S100 (manufactured by Toyo Seiki Seisaku-sho, Ltd.) at 200°C and 70 rpm for 3 minutes to obtain a resin composition.

### (Flexural Modulus and Flexural Strength)

Each of the obtained resin compositions was inj ection-molded by an inj ection molding machine ("EC75SX", manufactured by Shibaura Machine Co., Ltd.) to prepare a JIS multipurpose test piece A1. A central portion (length: 80 mm × width: 10 mm × thickness: 4 mm) of the test piece was subjected to a flexural strength test using a universal testing machine (manufactured by Instron, Type 5566) in accordance with JIS K 7171 (ISO 178), and a flexural modulus [MPa] and a flexural strength [MPa] were measured. The results are shown in Table 5.

### (Melt Flow Rate)

For each of the obtained resin compositions, the outflow rate (g/10 min) of the sample was measured in accordance with JIS K 7210:2014 using a melt indexer under the conditions of a temperature of 23°C and a load of 2.16 kg. The results are shown in Table 5.

### (Charpy Impact Strength)

The Charpy impact strength (23°C) of each of the obtained resin compositions was measured in the same procedure as described above. Further, the Charpy impact strength (0°C) and the Charpy impact strength (-23°C) were measured in the same procedure with the measurement temperature set at 0°C and -20°C. The results are shown in Table 5.

**Table 5**

| | | Example 10 | Example 11 | Comparative Example 7 | Comparative example 8 |
|---|---|---|---|---|---|
| Resin composition [parts by mass] | PP-2 | 60 | 60 | 60 | 60 |
| | TPE-7 | 20 | - | - | - |
| | TPE-8 | - | 20 | - | - |
| | TPE-5' | - | - | 20 | - |
| | TPE-6' | - | - | - | 20 |
| | HDPE-1 | 20 | 20 | 20 | 20 |
| Flexural modulus [23°C] (MPa) | | 950 | 990 | 850 | 940 |
| Flexural strength [23°C] (MPa) | | 22 | 22 | 20 | 22 |
| MFR [230°C, 2.16 kg] (g/10 min) | | 5 | 5 | 5 | 5 |
| Charpy impact strength [23°C] (kJ/m²) | | 62 | 61 | 48 | 56 |
| Charpy impact strength [0°C] (kJ/m²) | | 60 | 54 | 25 | 35 |
| Charpy impact strength [-20°C] (kJ/m²) | | 24 | 13 | 10 | 10 |

As shown in Table 5, the resin composition of Example 10 using TPE-7 had values of the flexural modulus, the flexural strength, and the MFR equal to or higher than those of the resin composition of Comparative Example 7 using TPE-5', and the Charpy impact strength in a temperature range from a temperature near room temperature to a low temperature was greatly improved.

In addition, the resin composition of Example 11 using TPE-8 also had values of the flexural modulus, the flexural strength, and the MFR equal to or higher than those of the resin composition of Comparative Example 8 using TPE-6', and the Charpy impact strength in a temperature range from a temperature near room temperature to a low temperature was improved.

From these results, it can be seen that the resin compositions using the hydrogenated products (TPE-7 and TPE-8) of the block copolymers satisfying the conditions (1) to (3) and the conditions (I) to (III) have flexural properties and fluidity equal to or higher than those of the resin composition using the hydrogenated product (TPE-5') of the block copolymer not satisfying the conditions (1), (3), (I) and (III) and the resin composition using the hydrogenated product (TPE-6') of the block copolymer not satisfying the conditions (3) and (III), and can improve impact resistance in a wide temperature range from near room temperature to low temperatures.

### [Examples 12 and 13 and Comparative Examples 9 and 10]

According to the mix proportion shown in Table 6, the hydrogenated products of the block copolymers obtained in the above Examples and Comparative Examples and the following oil components were prepared. Each of the hydrogenated products of the block copolymers and the base oil were mixed at 150°C for 3 hours by using a three one motor manufactured by Shinto Scientific Co., Ltd. under nitrogen, and then cooled to room temperature to obtain a precursor mixture. The obtained precursor mixture and lithium grease were mixed with a stainless spatula at 80 to 90°C for 30 minutes. Thereafter, the mixture was cooled to room temperature to obtain a gel composition.

### <Lithium grease>

. "Otokomae-MonotaRO (registered trademark) Lithium Grease" manufactured by MonotaRO Co., Ltd. (cone penetration number: 2, thickening agent: lithium soap, thickening agent content: 10% by mass, base oil: mineral oil, base oil content: 85 to 90% by mass)

### <Base oil>

· "SAMIC (registered trademark) G-150" (group II mineral oil) manufactured by Sanwa Kasei Kogyo Co., Ltd.

### (Worked Penetration and Increase in Cone Penetration)

The cone penetration (worked penetration) of each of the obtained gel compositions was measured in accordance with item 7 of JIS K 2220:2013. In addition, the worked stability of each of the obtained gel compositions was measured in accordance with item 15 of JIS K 2220:2013, and the difference between the worked stability and the worked penetration was defined as the increase in cone penetration. The results are shown in Table 6.

### (Oil Separation Degree)

The oil separation degree of each of the obtained gel compositions was measured in accordance with Item 11 of JIS K 2220:2013. The results are shown in Table 6.

### (Washing Water Resistance)

The washing water resistance of each of the obtained gel compositions was measured in accordance with Item 16 of JIS K 2220:2013. The results are shown in Table 6.

**Table 6**

| | | Example 12 | Example 13 | Comparative Example 9 | Comparative Example 10 |
|---|---|---|---|---|---|
| Gel composition [parts by mass] | Lithium grease | 80 | 80 | 80 | 80 |
| | Base oil | 17 | 17.6 | 17 | 17.6 |
| | TPE-8 | 3 | - | - | - |
| | TPE-7 | - | 2.4 | - | - |
| | TPE-6' | - | - | 3 | - |
| | TPE-7' | - | - | - | 2.4 |
| Worked penetration | | 273 | 278 | 279 | 283 |
| Increase in cone penetration | | 22 | 32 | 13 | 29 |
| Oil separation degree [100°C, 24 h] (% by mass) | | < 0.1 | 0.4 | < 0.1 | 0.5 |
| Washing water resistance [38°C, 1 h] (% by mass) | | 1.0 | 1.0 | 1.0 | 1.0 |

As shown in Table 6, the gel composition of Example 12 using TPE-8, which is a hydrogenated block copolymer satisfying the conditions (1) to (3), had the same oil separation degree and washing water resistance as the gel composition of Comparative Example 9 using TPE-6', which is a hydrogenated block copolymer not satisfying the condition (3), but had a low worked penetration and a relatively low increase in cone penetration, and had characteristics more suitable for a gel composition for grease.

In addition, as shown in Table 6, the gel composition of Example 13 using TPE-7, which is a hydrogenated block copolymer satisfying the conditions (1) to (3), had the same oil separation degree and washing water resistance as the gel composition of Comparative Example 10 using TPE-7', which is a hydrogenated block copolymer not satisfying the condition (3), but had a low worked penetration and a relatively low increase in cone penetration, and had characteristics more suitable for a gel composition for grease.

It is presumed that these results are obtained because the compatibility between TPE-8, which is a hydrogenated block copolymer satisfying the conditions (1) to (3), and oil is improved, and thus the thickening effect is improved at a temperature equal to or higher than room temperature.

### [Examples 14 and 15 and Comparative Examples 11 and 12]

According to the mix proportion shown in Table 7, the hydrogenated products of the block copolymers obtained in the above Examples and Comparative Examples and the following components were prepared. These materials were mixed at 150°C for 3 hours by using a three one motor manufactured by Shinto Scientific Co., Ltd. under nitrogen. Thereafter, the mixture was cooled to room temperature to obtain a gel composition.

### <Base oil>

. "SAMIC (registered trademark) G-150" (group II mineral oil) manufactured by Sanwa Kasei Kogyo Co., Ltd.

### <Pour point depressant>

· VISCOPLEX 1-330 manufactured by Evonik

### (Kinematic Viscosity)

For each of the obtained gel compositions, the kinematic viscosities of the gel composition at 40°C and 100°C were measured in accordance with JIS K 2283:2000. The results are shown in Table 7.

### (Viscosity Index)

The viscosity index of each of the obtained gel compositions was measured in accordance with JIS K 2283:2000. The results are shown in Table 7.

### (High-Temperature High-Shear Viscosity at 150°C)

The high-temperature high-shear viscosity at 150°C of each of the obtained gel compositions was measured or calculated in accordance with JPI Standard and Manuals Testing Method for Petroleum Products JPI-5S-36. The results are shown in Table 7.

### (Kinematic Viscosity after Shearing)

The kinematic viscosity (100°C) of each of the obtained gel compositions after shearing was measured by a diesel injector method in accordance with JPI Standard and Manuals Testing Method for Petroleum Products JPI-5S-29. The results are shown in Table 7.

### (MRV Viscosity at -30°C)

The low temperature pumping viscosity at -30°C (MRV viscosity at -30°C) of each of the obtained gel compositions was measured in accordance with ASTM D 4684. The results are shown in Table 7.

**Table 7**

| | | Example 14 | Example 15 | Comparative Example 11 | Comparative Example 12 |
|---|---|---|---|---|---|
| Gel composition [parts by mass] | Base oil | 98.6 | 98.7 | 98.6 | 98.7 |
| | Pour point depressant | 0.5 | 0.5 | 0.5 | 0.5 |
| | TPE-8 | 1.2 | - | - | - |
| | TPE-7 | - | 0.8 | - | - |
| | TPE-6' | - | - | 1.2 | - |
| | TPE-7' | - | - | - | 0.8 |
| Kinematic viscosity [40°C] (mm²/s) | | 64.3 | 68.7 | 59.6 | 65.2 |
| Kinematic viscosity [100^{,}C] (mm²/s) | | 11.1 | 10.6 | 10.4 | 10.1 |
| Viscosity index | | 166 | 142 | 164 | 140 |
| High-temperature high-shear viscosity [150°C] (mPa·s) | | 2.81 | 2.76 | 2.79 | 2.73 |
| Kinematic viscosity after shearing [100°C] (mm²/s) | | 10.8 | 9.8 | 10.1 | 9.4 |
| MRV viscosity [-30°C] (mPa·s) | | 106,000 | 216,000 | > 400,000 | > 400,000 |

As shown in Table 7, the gel composition of Example 14 using TPE-8, which is a hydrogenated block copolymer satisfying the conditions (1) to (3), had values of the kinematic viscosity at 40°C and 100°C, the viscosity index, the high-temperature high-shear viscosity, and the kinematic viscosity after shearing which were equivalent to those of the gel composition of Comparative Example 11 using TPE-6', which is a hydrogenated block copolymer not satisfying the condition (3), but had a very small MRV viscosity at -30°C. In addition, the gel composition of Example 15 using TPE-7, which is a hydrogenated block copolymer satisfying the conditions (1) to (3), had values of the kinematic viscosity at 40°C and 100°C, the viscosity index, the high-temperature high-shear viscosity, and the kinematic viscosity after shearing which were equivalent to those of the gel composition of Comparative Example 12 using TPE-7', which is a hydrogenated block copolymer not satisfying the condition (3), but had a very small MRV viscosity at -30°C. Therefore, the gel compositions of Examples 14 and 15 had advantageous characteristics for a gel composition for an engine oil having excellent low-temperature characteristics.

### [Example 16 and Comparative Example 13]

According to the mix proportion shown in Table 8, the hydrogenated products of the block copolymers obtained in the above Example and Comparative Example and the following oil components were prepared. These materials were mixed at 150°C for 3 hours by using a three one motor manufactured by Shinto Scientific Co., Ltd. under nitrogen. Thereafter, the mixture was cooled to room temperature to obtain a gel composition.

### <Base oil>

. "SAMIC (registered trademark) G-150" (group II mineral oil) manufactured by Sanwa Kasei Kogyo Co., Ltd.

### (Viscosity)

The viscosity (25°C, 50 sec⁻¹) of each of the obtained gel compositions was measured using a rheometer (R/S+ RHEOMETER, manufactured by BROOKFIELD ENGINEERING LABORATORIES, INC.) at 25°C under a shear rate condition of 50 s⁻¹. More specifically, about 30 mL of the gel composition was charged into a sample chamber (MB3-25F, manufactured by BROOKFIELD ENGINEERING LABORATORIES, INC.), attached to a rheometer main body on which a spindle (CC3-25, manufactured by BROOKFIELD ENGINEERING LABORATORIES, INC.) was set, and stabilized by measuring under a shear rate of 1 s⁻¹ for 300 seconds at 25°C. Subsequently, (1) the shear rate was increased from 1 s⁻¹ to 50 s⁻¹ over 120 seconds and then decreased from 50 s⁻¹ to 1 s⁻¹ over 120 seconds, continuously (2) the shear rate was increased from 1 s⁻¹ to 50 s⁻¹ over 120 seconds and then decreased from 50 s⁻¹ to 1 s⁻¹ over 120 seconds, and further continuously (3) the shear rate was increased from 1 s⁻¹ to 50 s⁻¹ over 120 seconds and then decreased from 50 s⁻¹ to 1 s⁻¹ over 120 seconds. The viscosity under a shear rate condition of 50 s⁻¹ obtained in the measurement in the step of (3) of increasing the shear rate from 1 s⁻¹ to 50 s⁻¹ over 120 seconds was adopted as the viscosity (25°C, 50 sec⁻¹) of the gel composition. The results are shown in Table 8.

**Table 8**

| | | Example 16 | Comparative Example 13 |
|---|---|---|---|
| Gel composition [parts by mass] | Base oil | 90 | 90 |
| | TPE-8 | 10 | - |
| | TPE-6' | - | 10 |
| Viscosity [25°C, 50 sec⁻¹] (mPa·s) | | 18,300 | 15,800 |

As shown in Table 8, the gel composition of Example 16 using TPE-8, which is a hydrogenated block copolymer satisfying the conditions (1) to (3), had a higher viscosity at 25°C than the gel composition of Comparative Example 13 using TPE-6', which is a hydrogenated block copolymer not satisfying the condition (3), and had advantageous properties for a cable filler. It is presumed that this is because the compatibility between the hydrogenated block copolymer TPE-8 satisfying the conditions (1) to (3) and the oil is improved, and thus the thickening effect is improved at a temperature equal to or higher than room temperature.

### [Example 17 and Comparative Example 14]

According to the mix proportion shown in Table 9, the hydrogenated products of the block copolymers obtained in the above Example and Comparative Example and the following components were prepared. These materials were mixed at 150°C for 3 hours by using a three one motor manufactured by Shinto Scientific Co., Ltd. under nitrogen. Thereafter, the mixture was cooled to room temperature to obtain a gel composition.

### <PAO>

· Poly α-olefin (Durasyn 166 manufactured by INEOS Oligomers)

### (Viscosity)

The viscosity (25°C, 50 sec⁻¹) of each of the obtained gel compositions was measured in the same procedure as described above. The results are shown in Table 9.

**Table 9**

| | | Example 17 | Comparative Example 14 |
|---|---|---|---|
| Gel composition [parts by mass] | PAO | 90 | 90 |
| | TPE-8 | 10 | - |
| | TPE-6' | - | 10 |
| Viscosity [25°C, 50 sec⁻¹] (mPa·s) | | 10,900 | 9,600 |

As shown in Table 9, the gel composition of Example 17 using TPE-8, which is a hydrogenated block copolymer satisfying the conditions (1) to (3), had a higher viscosity at 25°C than the gel composition of Comparative Example 14 using TPE-6', which is a hydrogenated block copolymer not satisfying the condition (3), and had advantageous properties for a gel composition for cosmetics. It is presumed that this is because the compatibility between the hydrogenated block copolymer TPE-8 satisfying the conditions (1) to (3) and the oil is improved, and thus the thickening effect is improved at a temperature equal to or higher than room temperature.

### Industrial Applicability

The hydrogenated product of a block copolymer and the resin composition of the present invention can be used for an automobile housing, various components mounted on an automobile, a housing thereof, and the like. In addition, the present invention can be used in various electrical products in the home appliance field such as television sets, various recorders including Blu-ray recorders and HDD recorders, projectors, game machines, digital cameras, home video cameras, antennas, speakers, electronic dictionaries, IC recorders, fax machines, copy machines, telephones, door phones, rice cookers, microwave ovens, oven ranges, refrigerators, dishwashers, dish dryers, IH cooking heaters, hot plates, vacuum cleaners, washing machines, chargers, sewing machines, irons, dryers, electric bicycles, air purifiers, water purifiers, electric toothbrushes, lighting apparatuses, air conditioners, outdoor units of air conditioners, dehumidifiers, humidifiers, and the like.

In addition, the gel composition of the present invention is useful for materials for cable fillers used for cables such as optical fiber cables, greases, engine oils, cosmetics, lubricating oils, asphalt modifiers, adhesives, pressure sensitive adhesives, resin modifiers, compatibilizers, sealing materials, coating materials, molded articles, fibers/nonwoven fabrics, drilling fluids, and the like.

## Claims

1. A hydrogenated product of a block copolymer comprising a polymer block (A) containing a structural unit derived from an aromatic vinyl compound and a polymer block (B) containing a structural unit derived from a conjugated diene compound, wherein the hydrogenated product of a block copolymer satisfies the following conditions (1) to (3):
(1) the structural unit derived from the conjugated diene compound in the polymer block (B) has a structural unit derived from butadiene and a structural unit derived from isoprene, but does not have a structural unit derived from farnesene;
(2) the hydrogenated product of the block copolymer has a glass transition temperature of -50°C or lower; and
(3) when a weight average molecular weight of the hydrogenated product of the block copolymer is defined as x and a crystallization temperature of the hydrogenated product of the block copolymer is defined as y (°C), a relationship of 5.8x/100,000 - y > 17 is satisfied.

2. The hydrogenated product of a block copolymer according to claim 1, wherein a content of the polymer block (A) in the hydrogenated product of a block copolymer is 5 to 70% by mass.

3. The hydrogenated product of a block copolymer according to claim 2, wherein the content of the polymer block (A) in the hydrogenated product of a block copolymer is 8 to 33% by mass.

4. The hydrogenated product of a block copolymer according to any one of claims 1 to 3, wherein a vinyl bonding amount in the polymer block (B) is 25 mol% or less.

5. The hydrogenated product of a block copolymer according to claim 4, wherein the vinyl bonding amount in the polymer block (B) is 18 mol% or less.

6. The hydrogenated product of a block copolymer according to any one of claims 1 to 5, wherein a content of the structural unit derived from butadiene in the polymer block (B) is 10 to 90 mol%.

7. The hydrogenated product of a block copolymer according to claim 6, wherein the content of the structural unit derived from butadiene in the polymer block (B) is 15 to 70 mol%.

8. The hydrogenated product of a block copolymer according to claim 6, wherein the content of the structural unit derived from butadiene in the polymer block (B) is 30 to 85 mol%.

9. The hydrogenated product of a block copolymer according to any one of claims 1 to 8, wherein the hydrogenated product of a block copolymer has a quantity of heat of crystallization of 20 J/g or less.

10. The hydrogenated product of a block copolymer according to any one of claims 1 to 9, wherein the hydrogenated product of a block copolymer has a weight average molecular weight of 30,000 to 500,000.

11. The hydrogenated product of a block copolymer according to any one of claims 1 to 10, wherein the polymer block (B) has a hydrogenation rate of 90 mol% or more.

12. The hydrogenated product of a block copolymer according to any one of claims 1 to 11, further satisfying the following condition (4):
(4) a chain ratio of 1,4-bond of hydrogenated butadiene represented by a proportion of a peak appearing at 29.2 ppm among peaks derived from the 1,4-bond of the hydrogenated butadiene, obtained by inverse gate decoupling ¹³C-NMR measurement, is less than 50%.

13. The hydrogenated product of a block copolymer according to any one of claims 1 to 12, wherein a tensile elongation at break measured in accordance with JIS K 6251 (2017) is 300% or more.

14. The hydrogenated product of a block copolymer according to any one of claims 1 to 13, wherein a shear storage modulus G' at -40°C measured by performing a complex shear viscosity test under the condition of a frequency of 1 Hz in accordance with JIS K 7244-10 (2005) is 200 MPa or less.

15. A resin composition comprising:
the hydrogenated product of a block copolymer according to any one of claims 1 to 14 as a component (a); and
one or more oil components selected from the group consisting of a mineral oil, a vegetable oil, and an ethylene/α-olefin copolymerized oligomer as a component (b),
wherein a content ratio (a)/(b) of the component (a) to the component (b) is 1/99 to 99/1 in terms of mass ratio.

16. A resin composition comprising:
the hydrogenated product of a block copolymer according to any one of claims 1 to 14 as a component (a); and
one or more selected from the group consisting of polyethylene, polypropylene, styrene-based resin, polyphenylene ether, polyester resin, polycarbonate, polyacetal, polyamide, polyarylene sulfide, polyarylate, polyimide, polyether ether ketone, and liquid crystal polyester as a component (c),
wherein a content ratio (a)/(c) of the component (a) to the component (c) is 1/99 to 99/1 in terms of mass ratio.

17. A gel composition comprising: the hydrogenated product of a block copolymer according to any one of claims 1 to 14 as a component (α); and a base oil (β).

18. A cable filler comprising the gel composition according to claim 17.

19. A cable comprising the gel composition according to claim 17.

20. A cosmetic comprising the gel composition according to claim 17.

21. A lubricating oil comprising the gel composition according to claim 17.

22. A grease comprising the gel composition according to claim 17.

23. A method for producing the hydrogenated product of a block copolymer according to any one of claims 1 to 14, comprising:
a first step of obtaining a block copolymer comprising a polymer block (A) containing a structural unit derived from an aromatic vinyl compound and a polymer block (B) containing a structural unit derived from butadiene and a structural unit derived from isoprene by performing a polymerization reaction using a polymerization initiator and at least an aromatic vinyl compound, butadiene, and isoprene as monomers; and
a second step of hydrogenating the block copolymer,
wherein at least one of the following elements (i) to (vi) is performed in the first step:
(i) an average feed rate when the butadiene and isoprene are fed to a reaction system is set to be 50 kg/h/mol or less;
(ii) a polymerization temperature is set to be 55 to 80°C;
(iii) a vinylating agent of 0.3% by mass or less with respect to the total mass of a raw material compound is added to the reaction system;
(iv) a time for feeding the butadiene and isoprene to the reaction system is set to be 2.5 hours or more;
(v) when an amount of the polymerization initiator charged is P (mol) and an amount of an unreacted conjugated diene monomer is Q (mol), Q/P during the polymerization of the polymer block (B) is 100 or less; and
(vi) a mass ratio when the butadiene and isoprene are fed to the reaction system is made to differ depending on time of introduction to the reaction system.
